(19) **Europäisches Patentamt / European Patent Office / Office européen des brevets**

(11) **EP 4 746 441 A1**

(12) **EUROPEAN PATENT APPLICATION**
published in accordance with Art. 153(4) EPC

(43) Date of publication:
**20.05.2026 Bulletin 2026/21**

(21) Application number: **24855367.9**

(22) Date of filing: **21.05.2024**

(51) International Patent Classification (IPC):
**H04Q 11/00** *(2006.01)*

(52) Cooperative Patent Classification (CPC):
**H04Q 11/00**

(86) International application number:
**PCT/CN2024/094551**

(87) International publication number:
**WO 2025/039637 (27.02.2025 Gazette 2025/09)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **18.08.2023 CN 202311052012**

(71) Applicant: **Huawei Technologies Co., Ltd.
Shenzhen, Guangdong 518129 (CN)**

(72) Inventors:
• **QI, Biao
Shenzhen, Guangdong 518129 (CN)**
• **HE, Haotian
Shenzhen, Guangdong 518129 (CN)**
• **CHANG, Tianhai
Shenzhen, Guangdong 518129 (CN)**

(74) Representative: **Maiwald GmbH
Engineering
Elisenhof
Elisenstrasse 3
80335 München (DE)**

(54) **OPTICAL NETWORK SYSTEM AND OPTICAL SPLITTING DEVICE**

(57) An optical network system and an optical splitting device are provided, and relate to the field of optical communication technologies. The optical network system includes a detection device, a first optical splitter, and an optical filter. The first optical splitter includes one optical input and N optical outputs, where N ≥ 2. The optical input of the first optical splitter is connected to the detection device, (N-1) optical outputs of the first optical splitter are connected to ingresses of (N-1) optical filters in one-to-one correspondence, and egresses of the (N-1) optical filters are connected to (N-1) optical splitting links. Different optical filters are configured to select optical signals of different wavelengths that pass through. The detection device is configured to: send probe optical signals of different wavelengths to the first optical splitter, and receive a probe optical signal returned by at least one optical splitting link. Based on the optical network system, the probe optical signals transmitted by the detection device may respectively enter different optical splitting links, and the probe optical signal that is returned by an optical splitting link and that is received by the detection device may reflect status information of the optical splitting link, to implement optical splitting link measurement and acceptance at a central office.

FIG. 3

## Description

This application claims priority to Chinese Patent Application No. 202311052012.4, filed with the China National Intellectual Property Administration on August 18, 2023, and entitled "Optical Network System and Optical Splitter Device", which is incorporated herein by reference in its entirety.

## TECHNICAL FIELD

This application relates to the field of optical communication technologies, and in particular, to an optical network system and an optical splitting device.

## BACKGROUND

A passive optical network (passive optical network, PON) is a main deployment mode of an optical access network. The PON includes three parts: an optical line terminal (optical line terminal, OLT), an optical distribution network (optical distribution network, ODN), and an optical network terminal (optical network terminal, ONT). The ODN includes a plurality of optical fiber links, and the plurality of optical fiber links may be formed by connecting one-stage or multi-stage optical splitters through optical fibers. The optical splitter is an important ODN passive device for splitting and combining optical signals, and is typically used for distribution of the optical signals, connection of optical paths, control of an optical signal transmission direction, coupling control between devices, and the like.

A fiber access terminal is a device used in an optical fiber communication network, and is configured to distribute optical fiber signals to different terminal devices. An optical splitting function of the fiber access terminal is implemented through an optical splitter in the fiber access terminal. The optical splitter in the fiber access terminal may be considered as an optical splitter close to a user side and connected to an ONT in the ODN.

After deploying the fiber access terminal, construction personnel typically use an optical time-domain reflectometer (optical time-domain reflectometer, OTDR) to measure link quality of an optical link between an end of the fiber access terminal and the OLT at a central office. However, use of the OTDR requires skilled construction personnel, and construction efficiency of the manual measurement is low.

## SUMMARY

This application provides an optical network system and an optical splitting device, to resolve problems that acceptance for a fiber access terminal in the optical network system has demanding requirements on technical personnel and construction efficiency is low.

According to a first aspect, this application provides an optical network system. The optical network system includes a detection device, a first optical splitter, and an optical filter. The first optical splitter includes one optical input and N optical outputs, where N ≥ 2. The optical input of the first optical splitter is connected to the detection device, (N-1) optical outputs of the first optical splitter are connected to ingresses of (N-1) optical filters in one-to-one correspondence, egresses of the (N-1) optical filters are connected to (N-1) optical splitting links, and the optical splitting link is for providing user access. Different optical filters are configured to select optical signals of different wavelengths that pass through. The detection device is configured to: send probe optical signals of different wavelengths to the first optical splitter, and receive a probe optical signal returned by at least one optical splitting link.

It should be understood that, because different optical filters are configured to select optical signals of different wavelengths that pass through, one probe optical signal sent by the detection device enters only one of the (N-1) optical splitting links one time, and a probe optical signal that is returned by the optical splitting link and received by the detection device may reflect status information of the optical splitting link. Therefore, quality acceptance may be subsequently performed on the optical splitting link based on the received probe optical signal returned by the optical splitting link. Based on the optical network system, a probe optical signal may be transmitted at a central office for measurement and acceptance of quality of an optical splitting link, and no manual measurement is required during networking deployment. In this way, technical requirements for construction personnel are less demanding, and networking deployment efficiency can be improved.

With reference to the first aspect, in a possible implementation, the detection device is further configured to detect status information of an optical fiber link based on the returned probe optical signal, where the status information may include connectivity and link quality of the optical fiber link.

With reference to the first aspect, in a possible implementation, an optical output other than the (N-1) optical outputs in the N optical outputs of the first optical splitter is connected to one optical splitting link; or an optical output other than the (N-1) optical outputs in the N optical outputs of the first optical splitter is connected to an ingress of one optical filter, and an egress of the optical filter is connected to one optical splitting link.

With reference to the first aspect, in a possible implementation, at least one optical output of the third optical splitter is connected to at least one optical reflector, and the at least one optical reflector is configured to be connected to at least one ONT. In other words, the at least one optical output of the third optical splitter is connected to the ONT through the optical reflector, and the optical reflector is configured to partially reflect the probe optical signal. Based on this implementation, the added optical reflector helps the detection device more obviously learn of an optical power change at the third optical splitter through measurement.

With reference to the first aspect, in a possible implementation, N optical splitting links connected to the N optical outputs of the first optical splitter include a first-type optical splitting link, and a plurality of second optical splitters on the first-type optical splitting link are first-type second optical splitters, where the first-type second optical splitter includes one first optical output and a plurality of second optical outputs. The first optical output is a cascading interface, and the plurality of second optical outputs are configured to be connected to a plurality of ONTs. At least one second optical output of the plurality of second optical outputs is connected to an ingress of at least one optical reflector, an egress of the at least one optical reflector is configured to be connected to at least one ONT, and the optical reflector is configured to partially reflect the probe optical signal.

Based on this solution, the second optical output of the second optical splitter may be used as a drop fiber port, so that a user can access an optical network at any optical splitting stage in the optical network system, thereby providing a flexible optical access manner. In addition, the optical reflector facilitates the detection device to sense a change of the probe signal at the second optical output, to detect a status of the second optical output.

With reference to the first aspect, in a possible implementation, N optical splitting links connected to the N optical outputs of the first optical splitter include a second-type optical splitting link, and a plurality of second optical splitters on the second-type optical splitting link are second-type second optical splitters, where the second-type second optical splitter includes one first optical output and one second optical output. The first optical output is a cascading interface, and the second optical output is connected to an optical input of a fourth optical splitter. The fourth optical splitter includes a plurality of optical outputs, at least one optical output of the fourth optical splitter is connected to an ingress of at least one optical reflector, an egress of the at least one optical reflector is configured to be connected to at least one ONT, and the optical reflector is configured to partially reflect the probe optical signal.

Based on this solution, the fourth optical splitter connected to the second optical output of the second optical splitter may be configured to connect to ONTs, so that the user can access an optical network at any optical splitting stage in the optical network system, thereby providing another flexible optical access manner. Compared with the previous implementation, in this implementation, each user is not necessarily to be connected to the second optical splitter separately. This can save optical fibers. The optical reflector is disposed at the output of the fourth optical splitter, so that the detection device can sense an optical power change of the probe optical signal at the fourth optical splitter, thereby measuring and accepting the fourth optical splitter.

With reference to the first aspect, in a possible implementation, N optical splitting links connected to the N optical outputs of the first optical splitter include a third-type optical splitting link, and a plurality of second optical splitters on the third-type optical splitting link include a first-type second optical splitter and a second-type second optical splitter, where the first-type second optical splitter includes one first optical output and a plurality of second optical outputs, and the second-type second optical splitter includes one first optical output and one second optical output. The first optical output of the first-type second optical splitter is a cascading interface, and the plurality of second optical outputs of the first-type second optical splitter are configured to be connected to a plurality of ONTs. The first optical output of the second-type second optical splitter is a cascading interface, and the second optical output of the second-type second optical splitter is configured to be connected to a fourth optical splitter. The fourth optical splitter includes a plurality of optical outputs, at least one optical output of the fourth optical splitter is connected to an ingress of at least one optical reflector, an egress of the at least one optical reflector is configured to be connected to at least one ONT, and the optical reflector is configured to partially reflect the probe optical signal.

Based on this solution, the second optical output of the second optical splitter may be directly connected to the ONT, or may be connected to the ONT through the fourth optical splitter. The two implementations may be used together in the optical network system, so that the optical network system is deployed more flexibly.

With reference to the first aspect, in a possible implementation, the optical network system further includes an OLT and a coupler, the detection device and the OLT are connected to the optical input of the first optical splitter through the coupler, and the optical filter allows an optical signal transmitted by the OLT to pass through.

Based on this solution, the detection device may be connected to the OLT through the coupler, so that the detection device is compatible with an existing PON network.

With reference to the first aspect, in a possible implementation, the second optical splitter is an uneven optical splitter, and optical power of the first optical output of the second optical splitter is greater than optical power of the second optical output of the second optical splitter.

With reference to the first aspect, in a possible implementation, the third optical splitter is an even optical splitter.

With reference to the first aspect, in a possible implementation, the fourth optical splitter is an even optical splitter.

With reference to the first aspect, in a possible implementation, the first optical splitter is an even optical splitter.

According to a second aspect, this application provides a first optical splitting device. The first optical splitting device includes a first optical splitter, one input port, N output ports, and at least (N-1) optical filters, where N ≥ 2. The input port of the first optical splitting device is connected to an optical input of the first optical splitter, the first optical splitter includes N optical outputs, and the N optical outputs of the first optical splitter are connected to the N output ports of the first optical splitting device in one-to-one correspondence. The (N-1) optical filters are serially connected between (N-1) optical outputs of the first optical splitter and (N-1) output ports of the first optical splitting device. Different optical filters are configured to select optical signals of different wavelengths that pass through.

With reference to the second aspect, in a possible implementation, an optical filter may be or may not be between a corresponding output port and an optical output other than the (N-1) optical outputs in the N optical outputs of the first optical splitter for serial connection.

According to a third aspect, this application provides a second optical splitting device. The second optical splitting device includes a first-type second optical splitter, one input port, one first output port, a plurality of second output ports, and at least one optical filter. The input port of the second optical splitting device is connected to an optical input of the first-type second optical splitter. The first-type second optical splitter includes one first optical output and a plurality of second optical outputs. The first optical output of the first-type second optical splitter is connected to the first output port of the second optical splitting device, and the plurality of second optical outputs of the first-type second optical splitter are connected to the plurality of second output ports of the second optical splitting device in one-to-one correspondence. At least one optical filter is serially connected between at least one second optical output of the first-type second optical splitter and at least one second output port of the second optical splitting device. Different optical filters are configured to select optical signals of different wavelengths that pass through.

According to a fourth aspect, this application provides another second optical splitting device. The second optical splitting device includes a second-type second optical splitter, one input port, one first output port, and one second output port. The input port of the second optical splitting device is connected to an optical input of a second-type second optical splitter. The second-type second optical splitter includes one first optical output and one second optical output. The first optical output of the second-type second optical splitter is connected to the first output port of the second optical splitting device, and the second optical output of the second-type second optical splitter is connected to the second output port of the second optical splitting device.

According to a fifth aspect, this application provides a third optical splitting device. The third optical splitting device includes a third optical splitter, one input port, a plurality of output ports, and at least one optical reflector. The input port of the third optical splitting device is connected to an optical input of the third optical splitter, and a plurality of optical outputs of the third optical splitter are connected to the plurality of output ports of the third optical splitting device in one-to-one correspondence. At least one optical reflector is serially connected between at least one optical output of the third optical splitter and at least one output port of the third optical splitting device.

According to a sixth aspect, this application provides a fourth optical splitting device. The fourth optical splitting device may include a fourth optical splitter, one input port, a plurality of output ports, and at least one optical reflector. An optical input of the fourth optical splitter is connected to the input port of the fourth optical splitting device, and a plurality of optical outputs of the fourth optical splitter are connected to the plurality of output ports of the fourth optical splitting device in one-to-one correspondence. At least one optical reflector is serially connected between at least one optical output of the fourth optical splitter and at least one output port of the fourth optical splitting device.

According to a seventh aspect, this application provides a fifth optical splitting device. The fifth optical splitting device may include a first optical splitter, one single-core input port, one dual-core output port, and at least one optical filter. The first optical splitter in the fifth optical splitting device is a 1:2 even optical splitter, and the first optical splitter includes two optical outputs. The single-core input port of the first optical splitting device is connected to an optical input of the first optical splitter, and the two optical outputs of the first optical splitter are connected to the dual-core output port of the first optical splitting device. The dual-core output port has two cores, and the two cores of the dual-core output port are in one-to-one correspondence with the two optical outputs of the first optical splitter. One optical filter is serially connected between at least one optical output of the first optical splitter and the dual-core output port, and different optical filters are configured to select optical signals of different wavelengths that pass through.

According to an eighth aspect, this application provides a sixth optical splitting device. The sixth optical splitting device may include a first-type second optical splitter, a second-type second optical splitter, one dual-core input port, one dual-core output port, a plurality of first single-core output ports, and one second single-core output port. The first-type second optical splitter includes one first optical output and a plurality of second optical outputs, and the second-type second optical splitter includes one first optical output and one second optical output. A first core of the dual-core input port of the sixth optical splitting device is connected to an optical input of the first-type second optical splitter, and a second core of the dual-core input port of the sixth optical splitting device is connected to an optical input of the second-type second optical splitter. A first core of the dual-core output port of the sixth optical splitting device is connected to the first optical output of the first-type second optical splitter, and a second core of the dual-core output port of the sixth optical splitting device is connected to the first optical output of the second-type second optical splitter. The plurality of second optical outputs of the first-type second optical splitter are connected to the plurality of first single-core output ports of the sixth optical splitting device in one-to-one correspondence, and the second optical output of the second-type second optical splitter is connected to the second single-core output port of the sixth optical splitting device.

According to a ninth aspect, this application provides a seventh optical splitting device. The seventh optical splitting device includes a third optical splitter, one dual-core input port, a plurality of first single-core output ports, and one second single-core output port. A first core of the dual-core input port of the seventh optical splitting device is connected to an optical input of the third optical splitter, a second core of the dual-core input port of the seventh optical splitting device is connected to the second single-core output port, and a plurality of optical outputs of the third optical splitter are connected to the plurality of first single-core output ports of the seventh optical splitting device in one-to-one correspondence.

**BRIEF DESCRIPTION OF DRAWINGS**

FIG. 1 is a diagram of detecting a fiber access terminal by using an optical power meter according to an embodiment of this application;

FIG. 2 is a diagram of detecting a fiber access terminal by using an OTDR according to an embodiment of this application;

FIG. 3 is a diagram of a structure of an optical network system according to an embodiment of this application;

FIG. 4 is a diagram of an optical power change curve of a probe optical signal according to an embodiment of this application;

FIG. 5 is a diagram of a structure of an optical network system according to an embodiment of this application;

FIG. 6 is a diagram of an optical power change curve of a probe optical signal according to an embodiment of this application;

FIG. 7 is a diagram of another optical power change curve of a probe optical signal according to an embodiment of this application;

FIG. 8 is a diagram of still another optical power change curve of a probe optical signal according to an embodiment of this application;

FIG. 9 is a diagram of comparison between an actual attenuation value of optical power and a rated attenuation value according to an embodiment of this application;

FIG. 10 is another diagram of comparison between an actual attenuation value of optical power and a rated attenuation value according to an embodiment of this application;

FIG. 11 is a diagram of another optical power change curve of a probe optical signal according to an embodiment of this application;

FIG. 12 is a diagram of comparison between an actual value and a theoretical value of a height of a reflection peak according to an embodiment of this application;

FIG. 13 is another diagram of comparison between an actual value and a theoretical value of a height of a reflection peak according to an embodiment of this application;

FIG. 14 is a diagram of a structure of another optical network system according to an embodiment of this application;

FIG. 15 is a diagram of a structure of still another optical network system according to an embodiment of this application;

FIG. 16 is a diagram of a structure of still another optical network system according to an embodiment of this application;

FIG. 17 is a diagram of still another optical power change curve of a probe optical signal according to an embodiment of this application;

FIG. 18 is a diagram of still another optical power change curve of a probe optical signal according to an embodiment of this application;

FIG. 19 is a diagram of a structure of a first optical splitting device according to an embodiment of this application;

FIG. 20 is a diagram of a structure of a second optical splitting device according to an embodiment of this application;

FIG. 21 is a diagram of a structure of a third optical splitting device according to an embodiment of this application;

FIG. 22 is a diagram of still another optical network system according to an embodiment of this application;

FIG. 23 is a diagram of a structure of another second optical splitting device according to an embodiment of this application;

FIG. 24 is a diagram of a structure of a fourth optical splitting device according to an embodiment of this application;

FIG. 25 is a diagram of still another optical network system according to an embodiment of this application;

FIG. 26 is a diagram of still another optical network system according to an embodiment of this application;

FIG. 27 is a diagram of a structure of a fifth optical splitting device according to an embodiment of this application;

FIG. 28 is a diagram of a structure of a sixth optical splitting device according to an embodiment of this application;

FIG. 29 is a diagram of a structure of a seventh optical splitting device according to an embodiment of this application; and

FIG. 30 is a diagram of still another optical network system according to an embodiment of this application.

## DESCRIPTION OF EMBODIMENTS

For ease of understanding, technical terms and related technologies in this application are first briefly described.

In conventional technologies, a procedure of construction acceptance and fault diagnosis for a fiber access terminal may be as follows.

1. Test connectivity: An optical power meter is connected to a to-be-tested end of the fiber access terminal (any end of the fiber access terminal), to detect whether there is any optical signal at the to-be-tested end. If an optical signal is detected at the to-be-tested end, it may be determined that an optical link from an OLT to the to-be-tested end is connected.

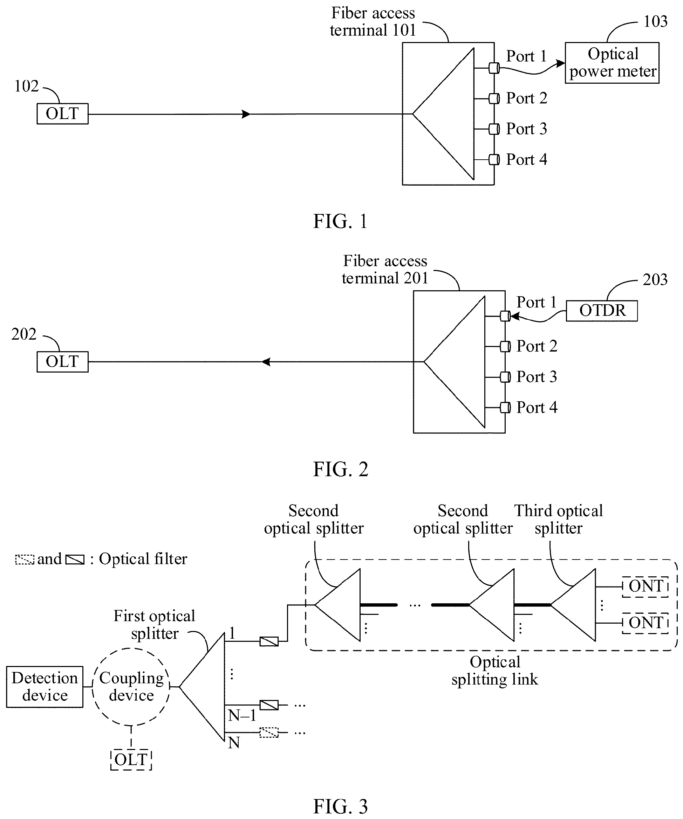

For example, FIG. 1 is a diagram of detecting a fiber access terminal by using an optical power meter. As shown in FIG. 1, a fiber access terminal 101 is connected to an OLT 102, and an optical power meter 103 is connected to a port 1 of the fiber access terminal 101. When the OLT 102 is connected to the fiber access terminal 101, the port 1 of the fiber access terminal 101 may receive an optical signal from the OLT 102, and the optical power meter 103 may detect the optical signal.

When it is determined that the fiber access terminal is correctly connected to the OLT, link quality may be further measured.

2. Measure link quality: An OTDR is connected to the port of the fiber access terminal, the OTDR is enabled to perform the test, and an OTDR curve may be obtained, where the OTDR curve reflects a signal strength change during transmission of the optical signal from the fiber access terminal to the OLT, and exception on the optical link may be determined based on the OTDR curve. In addition, the optical power meter may be further connected to each end of the fiber access terminal to measure optical power of an optical signal received by the end. The optical power measured at the end may be used for calculating a loss of the optical signal transmitted from the OLT to the end of the fiber access terminal. In this way, the quality of the optical link is determined based on the loss.

For example, FIG. 2 is a diagram of detecting a fiber access terminal by using an OTDR. As shown in FIG. 2, a fiber access terminal 201 is connected to an OLT 202, and an OTDR 203 is connected to a port 1 of the fiber access terminal 201. The OTDR 203 may input a probe optical signal to the port 1 of the fiber access terminal 201. When the OLT 202 is connected to the fiber access terminal 201, the signal sent by the OTDR 203 may be transmitted to the OLT 202. Therefore, the OTDR 203 may obtain an OTDR curve of a process of transmitting the probe optical signal from the port 1 of the fiber access terminal 201 to the OLT 202. In this way, a status and quality of an optical link are determined based on the OTDR curve.

However, the following problems exist in the case of using the optical power meter and the OTDR for acceptance and fault diagnosis for the deployed fiber access terminal.

1. As the fiber access terminal has many ends, usually 8 to 32 ends, construction efficiency is very low if the foregoing methods are used for acceptance and fault diagnosis for each end. In an actual situation, to improve the construction efficiency, only one or two ports of the fiber access terminal are generally spot-checked for acceptance and fault diagnosis by using the foregoing methods. In this case, construction quality of optical links corresponding to the remaining ends of the fiber access terminal cannot be ensured.

2. Use of related instruments for acceptance and fault location for the fiber access terminal on site poses requirements on instrument configuration for construction personnel and requires professional construction personnel. In general, construction costs of the fiber access terminal are increased.

This application provides an optical network system and a device. A detection device is disposed on an OLT side of the optical network system, and optical filters through which test signals of different wavelengths pass are disposed at different ends of a stage-1 optical splitter, so that an optical power change curve in a process of transmitting an optical signal along a branch link corresponding to each end of the stage-1 optical splitter may be obtained through the detection device, and quality of the optical link may be determined based on the optical power change curve. In this solution, the quality of the optical link does not need to be manually tested. This can effectively improve deployment efficiency of the optical fiber network and further reduce construction costs.

The following describes the technical solutions in embodiments of this application with reference to the accompanying drawings in embodiments of this application. In the descriptions of this application, unless otherwise specified, "/" indicates that associated objects are in an "or" relationship. For example, A/B may represent A or B. In this application, "and/or" describes only an association relationship between associated objects and represents that three relationships may exist. For example, A and/or B may indicate: Only A exists, both A and B exist, and only B exists, where A and B may be singular or plural. In addition, in the descriptions of this application, "a plurality of" means two or more than two unless otherwise specified. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner for ease of understanding.

In addition, the network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

FIG. 3 is a diagram of a structure of an optical network system according to this application. As shown in FIG. 3, the optical network system may include a detection device, a first optical splitter, and an optical filter. The first optical splitter includes one optical input and N optical outputs, where $N \geq 2$. The optical input of the first optical splitter is connected to the detection device, and (N-1) optical outputs of the first optical splitter are connected to ingresses of (N-1) optical filters in one-to-one correspondence. An egress of each optical filter is connected to one optical splitting link, where the optical splitting link is for providing user access. A plurality of optical filters are configured to select optical signals of different wavelengths that pass through. The detection device is configured to: send probe optical signals of different wavelengths to the first optical splitter, and receive a probe optical signal returned by at least one optical splitting link.

Optionally, an optical output other than the (N-1) optical outputs in the N optical outputs of the first optical splitter may be directly connected to one optical splitting link.

Optionally, an optical output other than the (N-1) optical outputs in the N optical outputs of the first optical splitter may be connected to an ingress of one optical filter, and an egress of the optical filter is connected to one optical splitting link. A wavelength of an optical signal allowed to pass through the optical filter is different from wavelengths of optical signals allowed to pass through filters connected to other optical outputs.

Optionally, as shown in FIG. 3, one optical splitting link may include a plurality of cascaded second optical splitters and one third optical splitter, where the first optical splitter is connected to a first-stage second optical splitter in the plurality of cascaded second optical splitters, and the third optical splitter is connected to a last-stage second optical splitter in the plurality of cascaded second optical splitters.

Optionally, the third optical splitter may include a plurality of optical outputs, and the plurality of optical outputs of the third optical splitter are configured to be connected to ONTs.

Optionally, the second optical splitter may include a plurality of optical outputs, one of the plurality of optical outputs is used as a cascading interface, and other optical outputs are used as drop fiber ports and are configured to be connected to ONTs.

Optionally, as shown in FIG. 3, the optical network system may further include an OLT, and the OLT may be connected to the optical input of the first optical splitter, so that the OLT may communicate with an ONT through an ODN including the first optical splitter, the second optical splitters, and the third optical splitter. It should be noted that all optical filters can be for service optical signals, transmitted by the OLT, to pass through, to ensure normal service transmission.

In a possible implementation, as shown in FIG. 3, the detection device and the OLT may be connected to the optical input of the first optical splitter through a coupling unit. Optical signals sent by the detection device and the OLT may be transmitted to the first optical splitter through the coupling unit, and an optical signal from the first optical splitter may also be transmitted to the detection device and the OLT through the coupling unit.

Based on the optical network system shown in FIG. 3, this application provides an optical link quality measurement method, to measure and accept the optical network system at a central office. The method may include the following steps.

Step 1. The detection device transmits a probe optical signal.

When the N optical outputs of the first optical splitter are connected to N optical filters, a wavelength of the probe optical signal transmitted by the detection device may be a wavelength that is allowed to pass through one of the N optical filters. Therefore, the probe optical signal can pass through the optical filter and is blocked at other filters, and the probe optical signal can enter an optical splitting link connected to the optical filter. Further, the detection device may receive a probe optical signal returned by the optical splitting link connected to the optical filter.

For example, it is assumed that the first optical splitter includes four optical outputs al, a2, a3, and a4, the optical output a1 is connected to an optical filter b1, the optical output a2 is connected to an optical filter b2, the optical output a3 is connected to an optical filter b3, the optical output a4 is connected to an optical filter b4, and the optical filter b1, the optical filter b2, the optical filter b3, and the optical filter b4 are each connected to one optical splitting link. A wavelength of an optical signal allowed to pass through the optical filter b1 is $\lambda 1$, a wavelength of an optical signal allowed to pass through the optical filter b2 is $\lambda 2$, a wavelength of an optical signal allowed to pass through the optical filter b3 is $\lambda 3$, and a wavelength of an optical signal allowed to pass through the optical filter b4 is $\lambda 4$. If the wavelength of the probe optical signal transmitted by the detection device is $\lambda 1$, the probe optical signal is output through the optical output a1 of the first optical splitter, passes through the optical filter b1, and enters the optical splitting link connected to the optical filter b1. The probe optical signal is blocked at the other three filters, and cannot enter optical splitting links connected to the other three filters.

When the (N-1) optical outputs of the first optical splitter are connected to the (N-1) optical filters, and the remaining optical output is not connected to the optical filter, the wavelength of the probe optical signal transmitted by the detection device may be a wavelength that is allowed to pass through one of the (N-1) optical filters, or may be a wavelength that is not allowed to pass through the (N-1) filters. If the wavelength of the probe optical signal is the wavelength that is allowed to pass through one of the (N-1) optical filters, the probe optical signal enters an optical splitting link connected to the optical filter and the optical splitting link connected to the optical output that is not connected to the optical filter. If the wavelength of the probe optical signal is the wavelength that is not allowed to pass through the (N-1) filters, the probe optical signal enters only the optical splitting link connected to the optical output that is not connected to the optical filter.

For example, it is assumed that the first optical splitter includes four optical outputs a1, a2, a3, and a4, the optical output a1 is connected to an optical filter b1, the optical output a2 is connected to an optical filter b2, the optical output a3 is connected to an optical filter b3, a wavelength of an optical signal allowed to pass through the optical filter b1 is $\lambda 1$, a wavelength of an optical signal allowed to pass through the optical filter b2 is $\lambda 2$, and a wavelength of an optical signal allowed to pass through the optical filter b3 is $\lambda 3$. The optical filter b1, the optical filter b2, and the optical filter b3 are each connected to one optical splitting link, and the optical output a4 is directly connected to one optical splitting link. If the wavelength of the probe optical signal transmitted by the detection device is $\lambda 1$, the probe optical signal is output through the optical output a1 of the first optical splitter, passes through the optical filter b1, and enters the optical splitting link connected to the optical filter b1. In addition, because the optical output a4 is not connected to the filter, the probe optical signal is further inputted into the optical output a4, and enters the optical splitting link connected to the optical output a4. If the wavelength of the probe optical signal transmitted by the detection device is $\lambda 4$, the optical filter b1, the optical filter b2, and the optical filter b3 block the probe optical signal, and the probe optical signal is output only through the optical output a4 and enters the optical splitting link connected to the optical output a4.

For example, it is assumed that the first optical splitter includes two optical outputs al and a2, the optical output a1 is connected to an optical filter b1, the optical filter b1 is connected to one optical splitting link, and the optical output a2 is directly connected to one optical splitting link. A wavelength of an optical signal allowed to pass through the optical filter b1 is $\lambda 1$. If the wavelength of the probe optical signal transmitted by the detection device is $\lambda 1$, the probe optical signal is output through the optical output a1 of the first optical splitter, passes through the optical filter b1, and enters the optical splitting link connected to the optical filter b1. In addition, because the optical output a2 is not connected to the filter, the probe optical signal is further inputted into the optical output a2, and enters the optical splitting link connected to the optical output a2. If the wavelength of the probe optical signal transmitted by the detection device is $\lambda 2$, the optical filter b1 blocks the probe optical signal, and the probe optical signal is output only through the optical output a2 and enters the optical splitting link connected to the optical output a2.

It can be learned that if all the N optical outputs of the first optical splitter are connected to optical filters, a probe optical signal transmitted by the detection device each time can enter only an optical splitting link connected to one optical output of the first optical splitter. If one of the N optical outputs is not connected to an optical filter, a probe optical signal transmitted by the detection device each time may enter optical splitting links connected to at most two optical outputs of the first optical splitter.

Step 2. The detection device receives a probe optical signal returned by an optical splitting link.

It should be understood that the probe optical signal is scattered in an optical fiber, and backscattered light is returned to a transmitting end (namely, the detection device) along the optical fiber, so that the detection device may receive the probe optical signal returned by the optical splitting link. The probe optical signal returned to the detection device is actually the backscattered light of the transmitted probe optical signal.

Optionally, if the probe optical signal enters only an optical splitting link connected to one optical output of the first optical splitter, the detection device receives a probe optical signal returned by the optical splitting link. Optionally, if the probe optical signal enters two optical splitting links connected to two optical outputs of the first optical splitter, the detection device receives a superimposition signal of probe optical signals returned by the two optical splitting links.

Step 3. The detection device or a controller generates an optical power change curve based on the probe optical signal returned by the optical splitting link.

The detection device may record signal strength and receiving time of the probe optical signal that is returned by the optical splitting link and that is received by the detection device.

Optionally, the detection device may generate, based on the information, a curve in which the signal strength of the probe optical signal changes with the receiving time.

Optionally, the detection device may report, to the controller, the information such as the signal strength and the receiving time of the probe optical signal that is returned by the optical splitting link and that is received by the detection device, and the controller generates the curve in which the signal strength of the probe optical signal changes with the receiving time.

Optionally, the detection device may be an OTDR, and the optical power change curve generated by the detection device based on the received probe optical signal returned by the optical splitting link may be an OTDR curve.

Optionally, if the probe optical signal enters only the optical splitting link connected to the optical output of the first optical splitter, the optical power change curve generated by the detection device or the controller is a curve of an optical power change status of the probe optical signal transmitted on the optical splitting link.

Optionally, if the probe optical signal enters the two optical splitting links connected to the two optical outputs of the first optical splitter, the optical power change curve generated by the detection device or the controller is a superimposition curve of change statuses of the probe optical signal transmitted on the two optical splitting links.

It should be understood that, because the receiving time of the probe optical signal returned by the optical splitting link is positively correlated with a transmission distance of the probe optical signal, the transmission distance of the probe optical signal may be calculated based on the receiving time. Therefore, the curve in which the signal strength changes with the receiving time may be converted into a curve in which the signal strength changes with the transmission distance. In the following embodiments of this application, an example in which the optical power change curve of the probe optical signal is the curve in which the signal strength of the probe optical signal changes with the transmission distance is used for unified description herein.

Optionally, after a probe optical signal passes through an optical splitter, optical power may attenuate to some extent. Therefore, there is an attenuation event corresponding to the optical splitter in the optical power change curve of the probe optical signal, where the attenuation event is an optical power descending step in the optical power change curve.

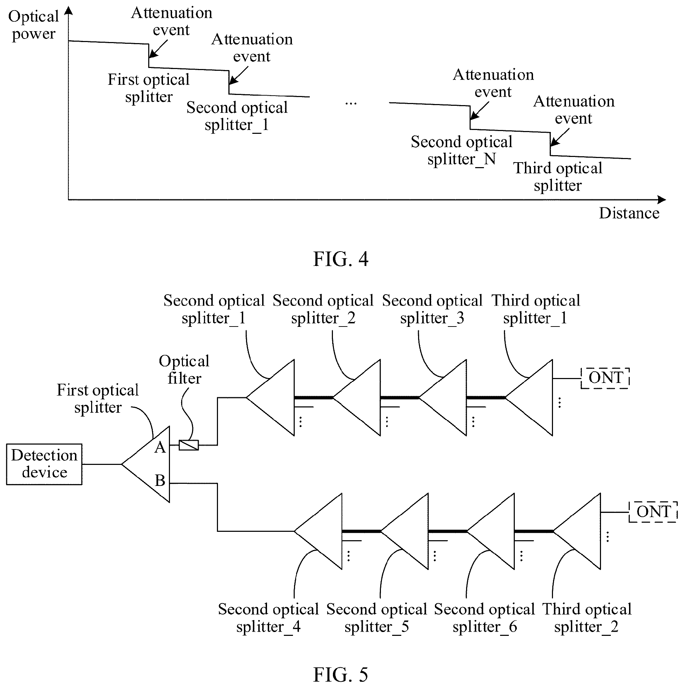

For example, the optical network system shown in FIG. 3 is used as an example. It is assumed that the probe optical signal enters one optical splitting link only through one optical output of the first optical splitter. In this case, a diagram of an optical power change curve of the probe optical signal may be shown in FIG. 4. The optical power change curve may sequentially include attenuation events corresponding to one first optical splitter, a plurality of second optical splitters (including a second optical splitter_1 to a second optical splitter_N marked in FIG. 4), and one third optical splitter. An abscissa of the optical power change curve is the transmission distance of the probe optical signal, and an ordinate is the optical power of the probe optical signal. The optical power of the probe optical signal attenuates with extension of the transmission distance.

It should be understood that, optical power of optical signals output through a plurality of optical outputs of an optical splitter may be different, but the detection device senses superimposition of optical signals output through all optical outputs of the optical splitter. Therefore, an optical power value of the probe optical signal sensed by the detection device after the probe optical signal passes through the optical splitter is a maximum optical power value in optical power of the optical signals output through all the optical outputs. Therefore, an attenuation value, of an attenuation event corresponding to the optical splitter, in the optical power change curve is a minimum value in attenuation values generated when the probe optical signals pass through the optical outputs.

Optionally, the second optical splitter in this application may be an uneven optical splitter. A cascading interface of the second optical splitter is referred to as a first optical output, and another optical output is referred to as a second optical output, where optical power of the first optical output is greater than optical power of any second optical output. Therefore, an attenuation value, of an attenuation event corresponding to the second optical splitter, in the optical power change curve is an attenuation value generated when the probe optical signal is output through the cascading interface (the first optical output).

Step 4. The detection device or the controller determines status information of an optical splitting link based on the optical power change curve.

Optionally, if the probe optical signal enters only the optical splitting link connected to the optical output of the first optical splitter, the obtained optical power change curve may reflect the optical power change status of the probe optical signal transmitted on the optical splitting link. Therefore, status information of the optical splitting link may be directly determined based on the optical power change curve.

Optionally, if the probe optical signal enters the two optical splitting links connected to the two optical outputs of the first optical splitter, the obtained optical power change curve is the superimposition curve of the change statuses of the probe optical signal on the two optical splitting links. An optical power value of the optical power change curve is a superposition value of power values of the probe optical signal on the two optical splitting links, and consequently cannot be for determining status information of either of the two optical splitting links. In this case, the detection device may further send an optical signal that enters only one of the two optical splitting links, to obtain an optical power change curve corresponding to the optical splitting link. Then, an optical power change curve of the probe optical signal on the other optical splitting link is inferred based on the superimposition curve of the change statuses of the probe optical signal on the two optical splitting links and the optical power change curve of the probe optical signal on one of the optical splitting links.

For example, FIG. 5 is a diagram of an optical network system. In the optical network system, a detection device is connected to an optical input of a first optical splitter, and the first optical splitter includes two optical outputs A and B. The optical output A of the first optical splitter is connected to an ingress of an optical filter, an egress of the optical filter is connected to an optical input of a second optical splitter_1, an optical output of the second optical splitter_1 is connected to an optical input of a second optical splitter_2, an optical output of the second optical splitter_2 is connected to an optical input of a second optical splitter_3, and an optical output of the second optical splitter_3 is connected to an optical input of a third optical splitter_1. The optical output B of the first optical splitter is directly connected to an optical input of a second optical splitter_4, an optical output of the second optical splitter_4 is connected to an optical input of a second optical splitter_5, an optical output of the second optical splitter_5 is connected to an optical input of a second optical splitter_6, and an optical output of the second optical splitter_6 is connected to an optical input of a third optical splitter_2. A wavelength of an optical signal allowed to pass through the optical filter is $\lambda A$. There are sequentially the second optical splitter_1, the second optical splitter_4, the second optical splitter_2, the second optical splitter_5, the second optical splitter_3, the second optical splitter_6, the third optical splitter_1, and the third optical splitter_2 in the plurality of second optical splitters and the third optical splitters in ascending order of distances to the first optical splitter.

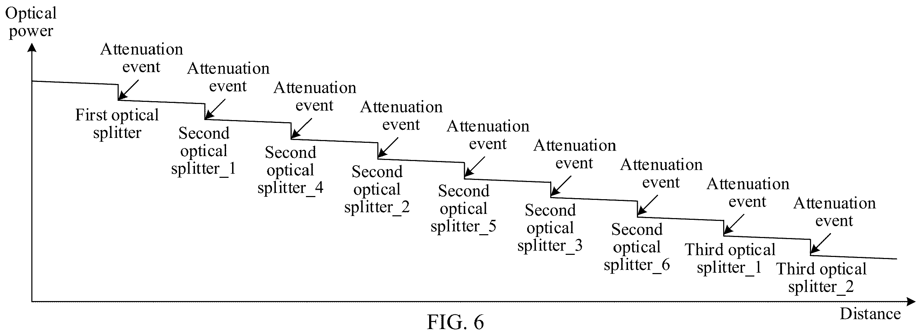

The optical network system shown in FIG. 5 is used as an example. If the detection device sends a probe optical signal whose wavelength is $\lambda A$, the probe optical signal is output through the optical output A of the first optical splitter and transmitted to the third optical splitter_1, and the probe optical signal is further output through the optical output B of the first optical splitter and transmitted to the third optical splitter_2. An optical power change curve that is of the probe optical signal whose

wavelength is $\lambda A$ and that is obtained by the detection device may be shown in FIG. 6. The optical power change curve includes a plurality of attenuation events. The plurality of attenuation events may sequentially correspond to the first optical splitter, the second optical splitter_1, the second optical splitter_4, the second optical splitter_2, the second optical splitter_5, the second optical splitter_3, the second optical splitter_6, the third optical splitter_1, and the third optical splitter_2. An optical power value at each position on the optical power change curve is a superposition value of the probe optical signal on branch links corresponding to the two optical outputs of the first optical splitter. The optical power change curve cannot be for determining status information of either of the branch links corresponding to the two optical outputs.

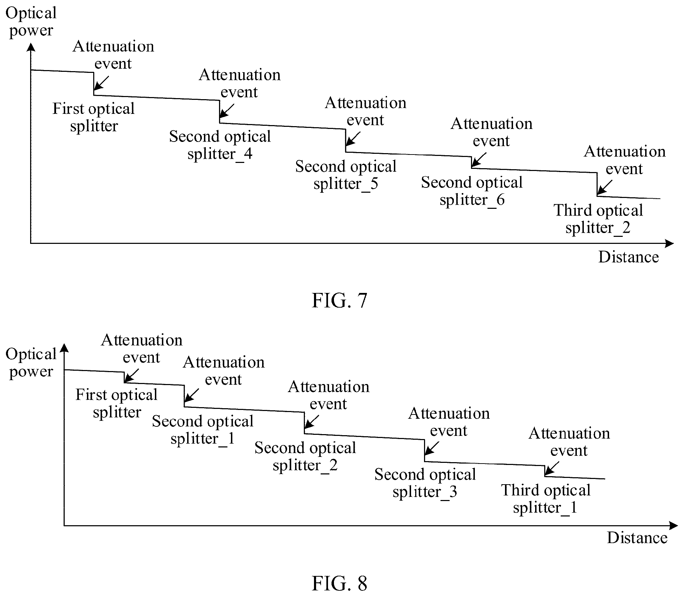

The optical network system shown in FIG. 5 is used as an example. If the detection device sends a probe optical signal whose wavelength is $\lambda B$, the probe optical signal cannot pass through an optical filter connected to the optical output A of the first optical splitter. Therefore, the probe optical signal is output only through the optical output B of the first optical splitter and transmitted to the third optical splitter_2. The optical power change curve with the wavelength of $\lambda B$ obtained by the detection device may be shown in FIG. 7. The optical power change curve includes a plurality of attenuation events. The plurality of attenuation events may sequentially correspond to the first optical splitter, the second optical splitter_4, the second optical splitter_5, the second optical splitter_6, and the third optical splitter_2. Positions of the same optical splitters in FIG. 7 and FIG. 6 are the same. The optical power change curve reflects an optical power change status in a process in which the probe optical signal is output through the optical output B of the first optical splitter and transmitted to the third optical splitter_2. Therefore, the optical power change curve may be for determining status information of a branch link corresponding to the optical output B of the first optical splitter.

In this embodiment of this application, with reference to the optical power change curve with the wavelength of $\lambda A$ shown in FIG. 6 and the optical power change curve with the wavelength of $\lambda B$ shown in FIG. 7, an optical power change curve corresponding to the probe optical signal output through the optical output A of the first optical splitter and transmitted to the third optical splitter_1 may be obtained through calculation. The optical power change curve corresponding to the probe optical signal output through the optical output A of the first optical splitter and transmitted to the third optical splitter_1 is obtained by excluding the optical power change curve with the wavelength of $\lambda B$ shown in FIG. 7 from the optical power change curve with the wavelength of $\lambda A$ shown in FIG. 6.

For example, the optical power change curve corresponding to the probe optical signal output through the optical output A of the first optical splitter and transmitted to the third optical splitter_1 may be shown in FIG. 8. The optical power change curve includes a plurality of attenuation events. The plurality of attenuation events may sequentially correspond to the first optical splitter, the second optical splitter_1, the second optical splitter_2, the second optical splitter_3, and the third optical splitter_1. Positions of the same optical splitters in FIG. 8 and FIG. 6 are the same.

Optionally, the status information of the optical splitting link may include a connectivity status and link quality of the optical splitting link.

Optionally, the detection device or the controller may learn of a topology of the optical splitting link. On this basis, the detection device or the controller may determine the connectivity status of the optical splitting link based on a correspondence between a position, in the optical power change curve, at which an attenuation event occurs and a position of an optical splitter on the optical splitting link. For example, in the optical power change curve, if an optical link still exists after an optical splitter corresponding to the last attenuation event, and the optical power change curve is terminated, it indicates that the optical splitting link is interrupted here.

Optionally, attenuation caused when the optical signal passes through the optical splitter may have a rated value, and the rated value may be measured at delivery of the optical splitter. In this application, an attenuation value of the optical splitter measured by the detection device may be compared with the rated attenuation value of the optical splitter, to determine the link quality. An attenuation value of the attenuation event, corresponding to the optical splitter, in the optical power change curve of the probe optical signal is the attenuation value that is of the optical splitter and that is obtained by the detection device through measurement. It should be understood that, if the attenuation value that is of the optical splitter and that is obtained by the detection device through measurement is greater than the rated attenuation value of the optical splitter, it indicates that a link connection at the optical splitter is abnormal, and a large optical power loss is caused. In this embodiment of this application, determining may be performed for all of the first optical splitter, the second optical splitter, and the third optical splitter in this manner. General description is provided herein.

In a possible implementation, when a difference between an attenuation value that is of the first optical splitter and that is obtained by the detection device through measurement and a rated attenuation value of the first optical splitter exceeds a first threshold, it may be considered that a fault exists on a link at the first optical splitter. When a difference between an attenuation value that is of the first optical splitter and that is obtained by the detection device through measurement and a rated attenuation value of the first optical splitter does not exceed a first threshold, it may be considered that networking of a network fluctuates normally. The first threshold may be considered as a fluctuation range reserved for networking of the first optical splitter.

In a possible implementation, when a difference between an attenuation value that is of the second optical splitter and that is obtained by the detection device through measurement and a rated attenuation value of the second optical splitter exceeds a second threshold, it may be considered that a fault exists on a link at the second optical splitter. When a difference between an actual attenuation value that is of the second optical splitter and that is obtained by the detection device through measurement and a rated attenuation value of the second optical splitter does not exceed a second threshold, it may be considered that networking of a network fluctuates normally. The second threshold may be considered as a fluctuation range reserved for networking of the second optical splitter.

In a possible implementation, when a difference between an attenuation value that is of the third optical splitter and that is obtained by the detection device through measurement and a rated attenuation value of the third optical splitter exceeds a third threshold, it may be considered that a fault exists on a link at the third optical splitter. When a difference between an attenuation value that is of the third optical splitter and that is obtained by the detection device through measurement and a rated attenuation value of the third optical splitter does not exceed a third threshold, it may be considered that networking of a network fluctuates normally. The third threshold may be considered as a fluctuation range reserved for networking of the third optical splitter.

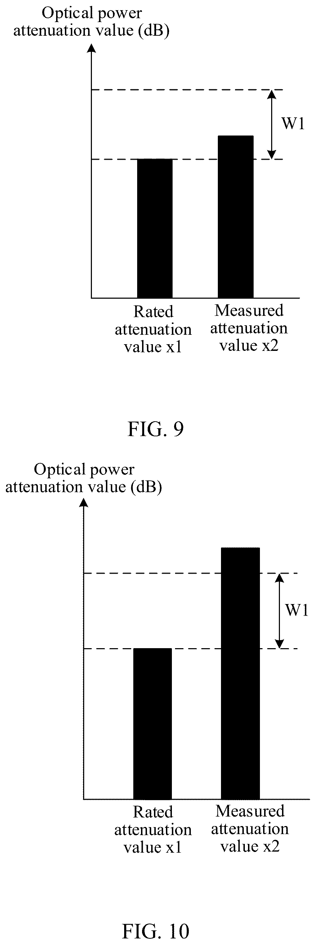

For example, FIG. 9 is a diagram of comparison between a measured attenuation value and a rated attenuation value. The rated attenuation value of an optical splitter is x1, the measured attenuation value is x2, and W1 is a fluctuation range reserved for networking of the optical splitter. In FIG. 9, x2 is greater than x1, but a difference between x2 and x1 does not exceed W1. In this case, it may be considered that the attenuation value of the optical splitter is in a normal networking fluctuation range and the optical splitter is in a normal state.

For another example, FIG. 10 is another diagram of comparison between a measured attenuation value and a rated attenuation value. The rated attenuation value of an optical splitter is x1, the measured attenuation value is x2, and W1 is a fluctuation range reserved for networking of the optical splitter. In FIG. 10, x2 is greater than x1, and a difference between x2 and x1 exceeds W1. In this case, it may be considered that an attenuation fault occurs on the optical splitter.

Optionally, an optical splitter corresponding to the attenuation values shown in FIG. 9 and FIG. 10 may be the first optical splitter, and W1 may be the first threshold. Alternatively, an optical splitter corresponding to the attenuation values shown in FIG. 9 and FIG. 10 may be the second optical splitter, and W1 may be the second threshold. Alternatively, an optical splitter corresponding to the attenuation values shown in FIG. 9 and FIG. 10 may be the third optical splitter, and W1 may be the third threshold.

Generally, if an actual attenuation value of the optical splitter (for example, the first optical splitter, the second optical splitter, or the third optical splitter) through which the probe optical signal passes exceeds a threshold range, an optical power attenuation abnormality may be caused due to a large insertion loss of the optical splitter.

Optionally, if an abnormal attenuation event occurs at another position in the optical power change curve in addition to a position at which the attenuation event corresponding to the optical splitter occurs, it may be determined that a fault exists at the position where the abnormal attenuation event occurs. For example, refer to FIG. 4. Assuming that another abnormal attenuation event occurs before the attenuation event corresponding to the first optical splitter, it may be determined that a fault may exist at a position corresponding to the abnormal attenuation event before the attenuation event corresponding to the first optical splitter on the optical link.

Based on the foregoing method, first, whether a fault occurs on an optical link at an optical splitter may be determined based on an attenuation event, corresponding to the optical splitter, in the optical power change curve. Second, whether a fault occurs at a position different from a position of the optical splitter may be determined depending on whether an abnormal attenuation event exists at the position different from the position of the optical splitter. Therefore, the status information of the optical splitting link may be determined based on the optical power change curve.

In this embodiment of this application, the detection device may send probe optical signals of different wavelengths, to obtain an optical power change curve of the probe optical signals transmitted through optical splitting links corresponding to optical outputs of the first optical splitter. Therefore, status information of the optical splitting links may be determined based on the optical power change curve of the optical splitting links. Measurement on the entire optical network system can be implemented by measuring each branch link in the optical network system. Based on the link quality measurement method in this application, measurement and acceptance on each optical splitting link in the optical network system can be implemented at a central office. This is more automatic. Compared with manual measurement and acceptance, this solution is more efficient.

Optionally, at least one optical output of a plurality of optical outputs of the third optical splitter is connected to at least one optical reflector, and the at least one optical reflector is configured to be connected to at least one ONT. In other words, the at least one optical output of the third optical splitter may be connected to the at least one ONT through the optical reflector. The optical reflector can partially reflect the probe optical signal. It should be understood that, because the third optical splitter is located at the end of the optical link, optical power of the probe optical signal that can be detected by the detection device and that is reflected by the third optical splitter is low. The optical reflector is disposed at the optical output of the third optical splitter, so that the optical power sensed by the detection device at the third optical splitter can be increased.

Optionally, when the optical output of the third optical splitter is connected to the optical reflector, the optical power change curve of the probe optical signal obtained by the detection device may include a reflection event corresponding to the optical reflector. The reflection event is represented by a reflection peak of the optical power in the optical power change curve. In this application, the reflection event and the reflection peak may be interchangeably used. General description is provided herein.

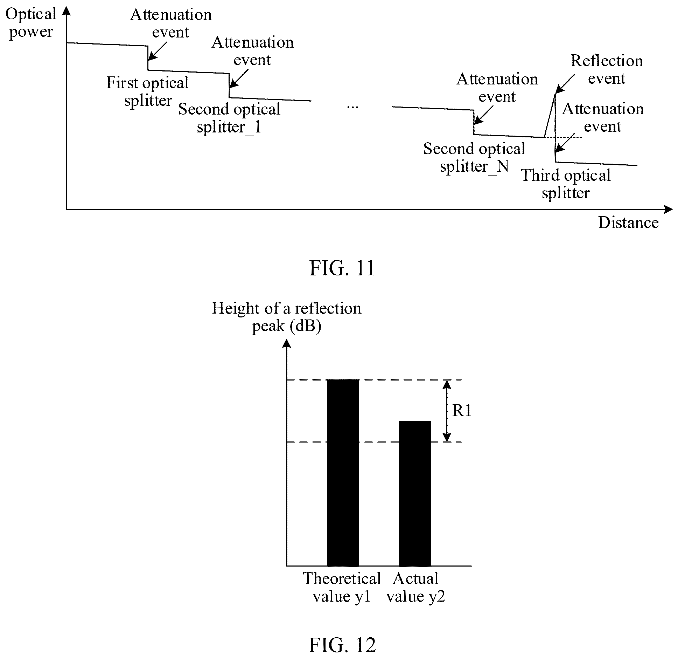

For example, FIG. 11 is a diagram of another optical power change curve of a probe optical signal. The optical power change curve is similar to the optical power change curve shown in FIG. 4, and a difference lies in that a reflection event exists at a position of the third optical splitter in addition to the attenuation event. As shown in FIG. 11, an optical power change of a probe optical signal at the third optical splitter is first increased to form a reflection peak, and then decreased, and an optical power value after the decrease is less than an optical power value before the reflection peak. This is because the optical reflector disposed at the optical output of the third optical splitter reflects the probe optical signal, which increases the optical power sensed by the detection device at the third optical splitter, so that the reflection peak is formed. However, after the probe optical signal passes through the third optical splitter and the optical reflector, the optical reflector provides no gain, and the third optical splitter performs optical splitting on the probe optical signal. Consequently, the optical power attenuates to be lower than that before the reflection peak. Attenuation events at other positions in FIG. 11 are the same as those in FIG. 4. Details are not described herein again.

A height of the reflection peak is related to a loss of the entire optical link on which the probe optical signal is transmitted from the detection device to the optical reflector. The loss may include a loss of an optical fiber link and losses of devices (for example, the first optical splitter, the second optical splitter, and the third optical splitter) before the optical reflector. Therefore, the height of the reflection peak may be used as a criterion for determining loss statuses of the optical fiber link and the devices before the optical reflector.

For example, a total loss generated when the probe optical signal is transmitted to the optical reflector at the third optical splitter may be obtained through calculation based on the height of the reflection peak, and a loss of the third optical splitter may be obtained by subtracting a loss generated when the probe optical signal is in an optical fiber and a loss generated when the probe optical signal passes through the optical splitters before the third optical splitter from the total loss. For example, Total loss in transmission to the optical reflector at the third optical splitter = Optical fiber loss + Loss of the first optical splitter + Loss of the second optical splitter + Loss of the third optical splitter. In this case, Loss of the third optical splitter = Total loss in transmission to the optical reflector at the third optical splitter - (Optical fiber loss + Loss of the first optical splitter + Loss of the second optical splitter). Optical fiber loss = Optical fiber length * Optical attenuation coefficient. The loss of the first optical splitter and the loss of the second optical splitter may be previously measured.

The optical reflector has a rated reflectivity at delivery, so that a theoretical value of the height of the reflection peak may be calculated based on the rated reflectivity. Further, in this application, a height, of the reflection peak, that is actually measured may be compared with the theoretical value of the height of the reflection peak, to determine whether a fault exists on the optical link before the optical reflector disposed at the optical output of the third optical splitter. In a possible implementation, when a difference between the height, of the reflection peak, that is actually measured and the theoretical value of the height of the reflection peak exceeds a fourth threshold, it may be considered that a fault exists on an optical link before the optical reflector disposed at the optical output of the third optical splitter. When a difference between the height, of the reflection peak, that is actually measured and the theoretical value of the height of the reflection peak does not exceed a fourth threshold, it may be considered that no fault exists on the optical link before the optical reflector. In setting of the fourth threshold, a normal loss of the optical link before the optical reflector is considered. For example, the loss includes normal insertion losses of the devices on the optical link before the optical reflector and the normal loss of the optical fiber.

For example, FIG. 12 is a diagram of comparison between an actual value and a theoretical value of a height of a reflection peak. The theoretical value of the height of the reflection peak is represented by y1, the height, of the reflection peak, that is actually measured is represented by y2, and R1 represents a fluctuation range reserved for networking of the optical reflector, where R1 includes the normal insertion losses of the devices before the optical reflector. In FIG. 12, y2 is less than y1, but a difference between y2 and y1 does not exceed R1. In this case, the optical link before the optical reflector is normal.

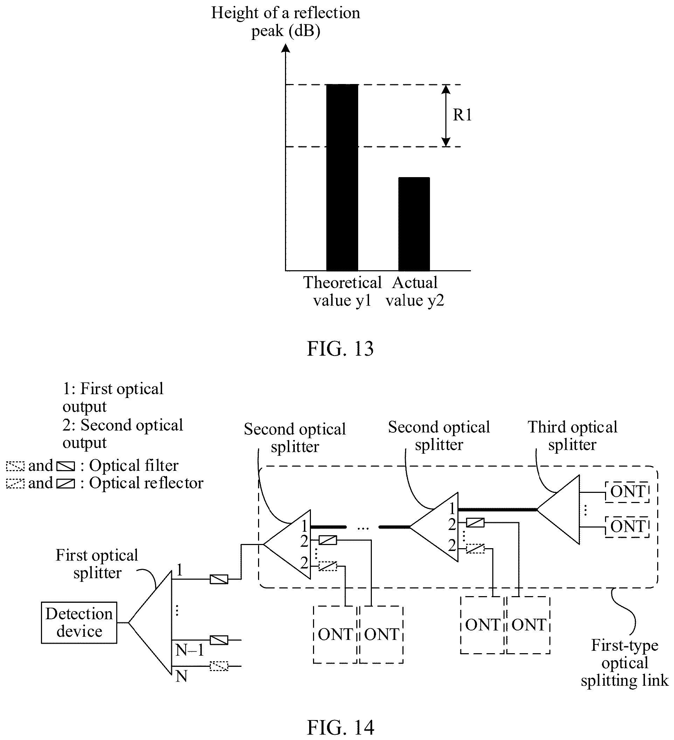

For another example, FIG. 13 is another diagram of comparison between an actual value and a theoretical value of a height of a reflection peak. The theoretical value of the height of the reflection peak is represented by y1, the height, of the reflection peak, that is measured is represented by y2, and R1 represents a fluctuation range reserved for networking of the optical reflector, where R1 includes the normal insertion losses of the devices before the optical reflector. In FIG. 13, y2 is less than y1, but a difference between y2 and y1 exceeds R1. In this case, a fault exists on the optical link before the optical reflector.

Optionally, types of second optical splitters may be classified into a first type and a second type. A first-type second optical splitter includes a plurality of second optical outputs, and a second-type second optical splitter includes one second optical output. For the first-type second optical splitter, output optical power of one first optical output may account for A% of input optical power of the optical splitter, and a sum of output optical power of the plurality of second optical outputs may account for B% of the input optical power of the optical splitter, where A and B are positive numbers, and A > B. In a possible implementation, the output optical power of the plurality of second optical outputs may be equally divided, output optical power of each second optical output may be $\frac{B\%}{M}$, where M represents a quantity of second optical outputs. For the second-type second optical splitter, output optical power of one first optical output accounts for A% of input optical power of the optical splitter, and output optical power of the second optical output accounts for B% of the input optical power of the optical splitter. For example, A = 80, and B = 20; or A = 70, and B = 30; or A = 60, and B = 40.

In a possible implementation, N optical splitting links corresponding to the N optical outputs of the first optical splitter may include a first-type optical splitting link, and all second optical splitters on the first-type optical splitting link are of the first type. For example, FIG. 14 is a diagram of a structure of another optical network system. The optical network system includes a first-type optical splitting link. A first optical output of each second optical splitter is used as a cascading interface, and a plurality of second optical outputs of the second optical splitter are configured to be connected to a plurality of ONTs. It should be understood that, for a connection relationship between a detection device, optical filters, a first optical splitter, second optical splitters, and a third optical splitter in FIG. 14, refer to related descriptions in FIG. 3. Details are not described herein again.

Optionally, in FIG. 14, at least one second optical output of a first-type second optical splitter is connected to an ingress of at least one optical reflector, and an egress of the at least one optical reflector is configured to be connected to at least one ONT. In other words, the at least one second optical output of the first-type second optical splitter is connected to the ONT through the optical reflector.

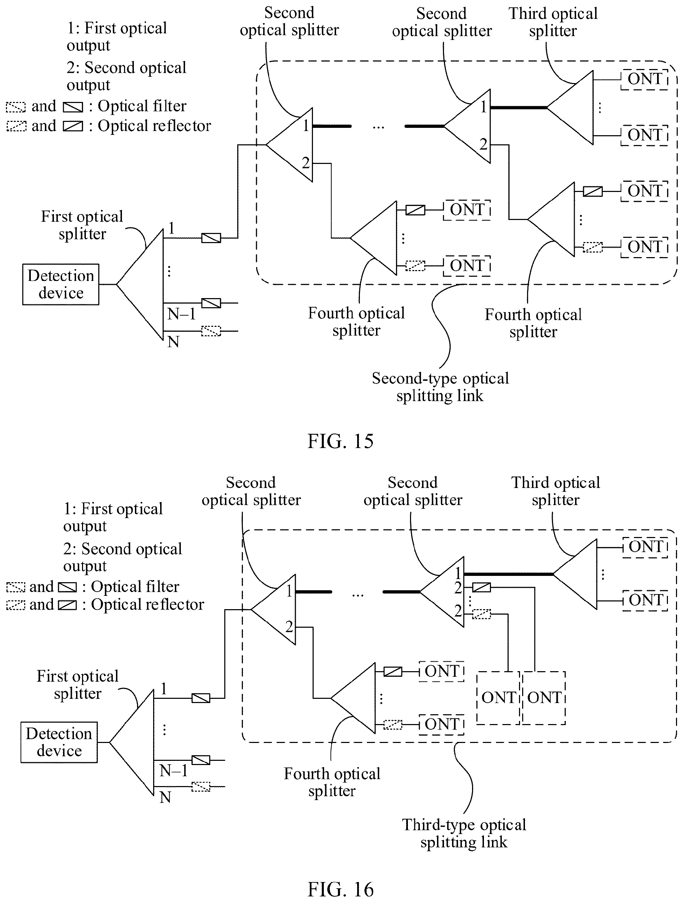

In a possible implementation, N optical splitting links corresponding to the N optical outputs of the first optical splitter may include a second-type optical splitting link, and all second optical splitters on the second-type optical splitting link may be of the second type. For example, FIG. 15 is a diagram of a structure of still another optical network system. The optical network system includes a second-type optical splitting link. A first optical output of each second optical splitter is used as a cascading interface, a second optical output of the second optical splitter is connected to an optical input of a fourth optical splitter, and a plurality of optical outputs of the fourth optical splitter are configured to be connected to a plurality of ONTs. At least one optical output of the fourth optical splitter is connected to an ingress of at least one optical reflector, and an egress of the at least one optical reflector is configured to be connected to at least one ONT. In other words, at least one optical output of the plurality of optical outputs of the fourth optical splitter is connected to the at least one ONT through the optical reflector. For a connection relationship between a detection device, optical filters, a first optical splitter, second optical splitters, and a third optical splitter in FIG. 15, refer to related descriptions in FIG. 3. Details are not described herein again.

In a possible implementation, N optical splitting links corresponding to the N optical outputs of the first optical splitter may include a third-type optical splitting link, and the third-type optical splitting link may include a first-type second optical splitter and a second-type second optical splitter. For example, FIG. 16 is a diagram of a structure of still another optical network system. The optical network system includes a third-type optical splitting link. A first optical output of a first-type second optical splitter is used as a cascading interface, and a plurality of second optical outputs of the first-type second optical splitter are configured to be connected to a plurality of ONTs. In addition, a first optical output of a second-type second optical splitter is used as a cascading interface, a second optical output of the second-type second optical splitter is connected to an optical input of a fourth optical splitter, and a plurality of optical outputs of the fourth optical splitter are configured to be connected to a plurality of ONTs. At least one optical output of the fourth optical splitter is connected to an ingress of at least one optical reflector, and an egress of the at least one optical reflector is configured to be connected to at least one ONT. In other words, at least one optical output of the plurality of optical outputs of the fourth optical splitter is connected to the at least one ONT through the optical reflector.

Optionally, in FIG. 16, at least one second optical output of a first-type second optical splitter is connected to an ingress of at least one optical reflector, and an egress of the at least one optical reflector is configured to be connected to at least one ONT. In other words, the at least one second optical output of the first-type second optical splitter is connected to the ONT through the optical reflector.

In this embodiment of this application, a plurality of optical splitting links corresponding to a plurality of optical outputs of the first optical splitter may include at least one of a first-type optical splitting link, a second-type optical splitting link, or a third-type optical splitting link. This is described herein.

Optionally, if a probe optical signal enters the first-type optical splitting link through an optical output of the first optical splitter, and a second optical output of a first-type second optical splitter on the first-type optical splitting link is not connected to an optical reflector, an optical power change curve of the probe optical signal may be shown in FIG. 4. An attenuation value of an attenuation event, corresponding to the second optical splitter, in the optical power change curve is an attenuation value generated when the probe optical signal is output through the first optical output of the second optical splitter, and the optical power change curve does not reflect attenuation generated when the probe optical signal is output through the second optical output. However, output optical power of the first optical output of the second optical splitter is proportional to output optical power of the second optical output. In this application, attenuation generated from an optical input to the second optical output may be estimated based on attenuation generated from the optical input to the first optical output. Further, quality of a link from the optical input to the second optical output may be determined by comparing an actual attenuation value of the second optical output with a rated attenuation value.

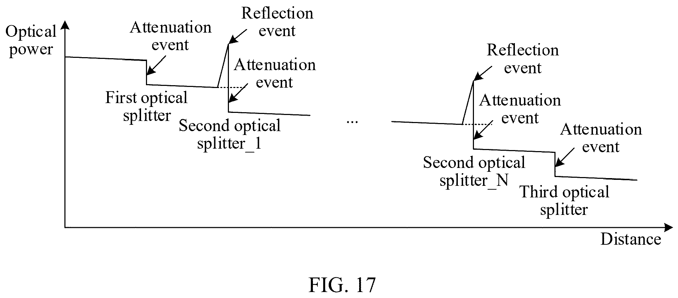

Optionally, if the probe optical signal enters the first-type optical splitting link through an optical output of the first optical splitter, and at least one second optical output of the first-type second optical splitter on the first-type optical splitting link is connected to at least one optical reflector, an optical power change curve of the probe optical signal may be shown in FIG. 17. Compared with the optical power change curve shown in FIG. 4, at a position of the second optical splitter, there is further a reflection event in addition to an attenuation event. As shown in FIG. 17, an optical power change of the probe optical signal at the second optical splitter is first increased to form a reflection peak, and then decreased, and an optical power value after the decrease is less than an optical power value before the reflection peak. This is because the optical reflector disposed at the second optical output of the second optical splitter increases optical power of the second optical splitter, but overall optical power when the probe optical signal passes through the second optical splitter attenuates. For attenuation events corresponding to the first optical splitter and the third optical splitter in FIG. 17, refer to related descriptions in FIG. 4. Details are not described herein again.

It can be learned from the foregoing description of the reflection peak, a height of a reflection peak corresponding to an optical reflector disposed at the second optical output of the second optical splitter is related to a loss of an optical link before the reflector. The height of the reflection peak may be used as a basis for determining loss statuses of an optical fiber link and devices before the optical reflector.

Optionally, a total loss generated when the probe optical signal is transmitted to an optical reflector at a second optical splitter_x may be obtained through calculation based on the height of the reflection peak, and the loss generated when the probe optical signal passes through the second optical splitter_x may be obtained by subtracting a loss generated when the probe optical signal is in an optical fiber and a loss generated when the probe optical signal passes through optical splitters before the second optical splitter_x from the total loss. For example, Total loss in transmission to the optical reflector at the second optical splitter_x = Optical fiber loss + Loss of the first optical splitter + Loss of a second optical splitter_1 +... + Loss of the second optical splitter_x. In this case, Loss of the second optical splitter_x = Total loss in transmission to the optical reflector at the second optical splitter_x - (Optical fiber loss + Loss of the first optical splitter + Loss of the second optical splitter_1 +... + Loss of a second optical splitter_x-1). Optical fiber loss = Optical fiber length * Optical attenuation coefficient. The loss of the first optical splitter and losses of the second optical splitter_1 to the second optical splitter_x-1 may be previously measured.

Optionally, in FIG. 14, an optical reflector may alternatively be disposed at an optical output of the third optical splitter connected to the first-type optical splitting link. In this case, in FIG. 17, there may also be a reflection event before an attenuation event corresponding to the third optical splitter. For a change of the optical power change curve at the third optical splitter in this case, refer to FIG. 11. Details are not described herein again.

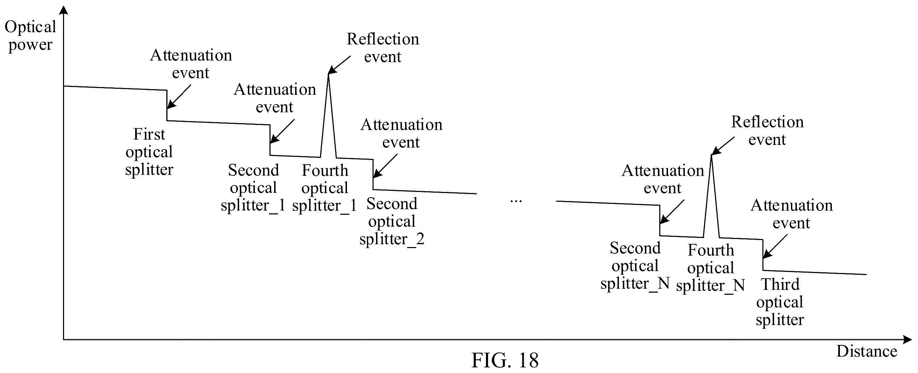

Optionally, if the probe optical signal enters the second-type optical splitting link through the optical output of the first optical splitter, an optical power change curve of the probe optical signal may be shown in FIG. 18. A reflection event further exists at a distance after the second optical splitter, and the reflection event is generated by an optical reflector disposed at the optical output of the fourth optical splitter connected to the second optical splitter. In the optical power change curve, a distance between the reflection event generated by the optical reflector disposed at the optical output of the fourth optical splitter and the attenuation event corresponding to the second optical splitter is related to a distance between the fourth optical splitter and the second optical splitter. Generally, the distance between the second optical splitter and the fourth optical splitter connected to the second optical splitter is shorter than a distance between the second optical splitter and a next-stage second optical splitter or the third optical splitter. Therefore, a position of the reflection event generated by the optical reflector connected to the fourth optical splitter is between a position of the attenuation event corresponding to the second optical splitter and a position of an attenuation event corresponding to the next-stage second optical splitter, or between a position of the attenuation event corresponding to the second optical splitter and a position of an attenuation event corresponding to the third optical splitter. For example, as shown in FIG. 18, in the optical power change curve, a reflection event exists at a position between positions of an attenuation event corresponding to the second optical splitter_1 and an attenuation event corresponding to the second optical splitter_2, and the reflection event is generated by an optical reflector disposed at an optical output of a fourth optical splitter_1 connected to the second optical splitter_1. In the optical power change curve, a reflection event exists at a position between positions of an attenuation event corresponding to the second optical splitter_N and the attenuation event corresponding to the third optical splitter, and the reflection event is generated by an optical reflector disposed at an optical output of a fourth optical splitter_N connected to the second optical splitter_N.

It should be understood that, the optical power change curve cannot reflect attenuation generated when the probe optical signal is output through the second optical output of the second optical splitter, and consequently, a loss of an optical link of the fourth optical splitter cannot be detected based on attenuation of optical power. In this application, an optical reflector is disposed at the optical output of the fourth optical splitter, so that the detection device can detect an optical power gain provided by the reflector. Further, quality of an optical link before the fourth optical splitter may be determined based on a height of a reflection peak corresponding to the optical reflector disposed at the optical output of the fourth optical splitter.

Optionally, a total loss generated when the probe optical signal is transmitted to an optical reflector at a fourth optical splitter_x may be obtained through calculation based on the height of the reflection peak, and a loss generated when the probe optical signal passes through the fourth optical splitter_x may be obtained by subtracting a loss generated when the probe optical signal is in an optical fiber and a loss generated when the probe optical signal passes through optical splitters before the fourth optical splitter_x from the total loss. The fourth optical splitter_x is a fourth optical splitter connected to a second optical output of the second optical splitter_x. For example, Total loss in transmission to the optical reflector at the fourth optical splitter_x = Optical fiber loss + Loss of the first optical splitter + Loss of a second optical splitter_1 +... + Loss of the second optical splitter_x + Loss of the fourth optical splitter_x. In this case, Loss of the fourth optical splitter_x = Total loss in transmission to the optical reflector at the fourth optical splitter_x - (Optical fiber loss + Loss of the first optical splitter + Loss of the second optical splitter_1 +... + Loss of the second optical splitter_x). Optical fiber loss = Optical fiber length * Optical attenuation coefficient. The loss of the first optical splitter and losses of the second optical splitter_1 to the second optical splitter_x may be previously measured.

Optionally, in FIG. 15, an optical reflector may alternatively be disposed at an optical output of the third optical splitter connected to the second-type optical splitting link. In this case, in FIG. 18, there may also be a reflection event before an attenuation event corresponding to the third optical splitter. For a change of the optical power change curve at the third optical splitter in this case, refer to FIG. 11. Details are not described herein again.

Optionally, if the probe optical signal passes through a branch link of the third-type optical splitting link, the first-type second optical splitter corresponds to an attenuation event in the optical power change curve. For details, refer to the attenuation event corresponding to the second optical splitter in FIG. 17. The second-type second optical splitter and the fourth optical splitter connected to the second-type second optical splitter respectively correspond to an attenuation event and a reflection event in the optical power change curve. For details, refer to the attenuation event corresponding to the second optical splitter and the reflection event corresponding to the fourth optical splitter in FIG. 18. Details are not described in this application again.

Optionally, in FIG. 16, an optical reflector may alternatively be disposed at an optical output of the third optical splitter connected to the third-type optical splitting link.

Optionally, the first optical splitter, the third optical splitter, and the fourth optical splitter in embodiments of this application may be even optical splitters, and may each include N even-splitting optical outputs, where output optical power of each optical output accounts for $\frac{1}{N}$ of input optical power, and $N \geq 2$. The N optical outputs of the first optical splitter are all configured to cascade lower-stage second optical splitters. An optical signal received from an optical input by the first optical splitter is evenly split, and then flows to the lower-stage optical splitters that the N optical outputs cascade. For example, the first optical splitter may be a 1:2 even optical splitter, and includes one optical input and two even-splitting optical outputs. The N optical outputs of the third optical splitter and the N optical outputs of the fourth optical splitter are all configured to be connected to ONTs. Optical signals received from optical inputs by the third optical splitter and the fourth optical splitter are evenly split, and then flow to the ONTs connected to the N optical outputs. For example, the first optical splitter may be a 1:8 even optical splitter, and includes one optical input and eight even-splitting optical outputs.

Optionally, the optical filter in embodiments of this application may be a reflective optical filter or a transmissive optical filter. This is not limited in this application. When the optical filter is the transmissive optical filter, transmissive optical filters connected to different optical outputs of the first optical splitter may transmit probe optical signals of different wavelengths. When the optical filter is the reflective optical filter, reflective optical filters connected to different optical outputs of the first optical splitter reflect probe optical signals of a specific wavelength, so that different reflective optical filters can allow probe optical signals of different wavelengths to pass through, thereby achieving a same effect as the transmission optical filter.

The optical network system and the optical link quality measurement method provided in this application are described in the foregoing embodiments. The following describes a specific implementation form of a device in the optical network system and an optical network system deployed based on a specific optical network device.

Optionally, in the foregoing optical network system in this application, an optical splitter and a filter or a reflector connected to an optical output of the optical splitter may be integrated into an optical splitting device, so that the optical network system may be deployed by connecting different optical splitting devices.

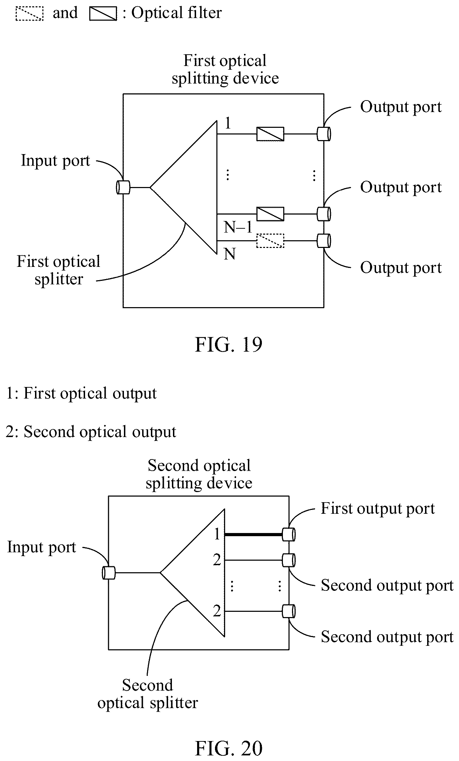

For example, FIG. 19 is a diagram of a structure of a first optical splitting device according to this application. As shown in FIG. 19, the first optical splitting device includes a first optical splitter, one input port, N output ports, and at least (N-1) optical filters, where $N \geq 2$. The input port of the first optical splitting device is connected to an optical input of the first optical splitter, the first optical splitter includes N optical outputs, and the N optical outputs of the first optical splitter are connected to the N output ports of the first optical splitting device in one-to-one correspondence. The (N-1) optical filters are serially connected between (N-1) optical outputs of the first optical splitter and (N-1) output ports of the first optical splitting device. Different optical filters are configured to select optical signals of different wavelengths that pass through.

Optionally, in the first optical splitting device shown in FIG. 19, an optical filter may be or may not be between a corresponding output port and an optical output other than the (N-1) optical outputs in the N optical outputs of the first optical splitter for serial connection. Both the two implementation structures are protected in this application. Description is provided herein.

For example, FIG. 20 is a diagram of a structure of a second optical splitting device according to this application. As shown in FIG. 20, the second optical splitting device includes a first-type second optical splitter, one input port, one first output port, a plurality of second output ports, and at least one optical filter. The input port of the second optical splitting device is connected to an optical input of the first-type second optical splitter. The first-type second optical splitter includes one first optical output and a plurality of second optical outputs. The first optical output of the first-type second optical splitter is connected to the first output port of the second optical splitting device, and the plurality of second optical outputs of the first-type second optical splitter are connected to the plurality of second output ports of the second optical splitting device in one-to-one correspondence. At least one optical filter is serially connected between at least one second optical output of the first-type second optical splitter and at least one second output port of the second optical splitting device. Different optical filters are configured to select optical signals of different wavelengths that pass through.

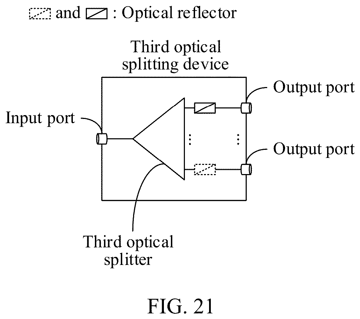

For example, FIG. 21 is a diagram of a structure of a third optical splitting device according to this application. As shown in FIG. 21, the third optical splitting device includes a third optical splitter, one input port, a plurality of output ports, and at least one optical reflector. The input port of the third optical splitting device is connected to an optical input of the third optical splitter, and a plurality of optical outputs of the third optical splitter are connected to the plurality of output ports of the third optical splitting device in one-to-one correspondence. At least one optical reflector is serially connected between at least one optical output of the third optical splitter and at least one output port of the third optical splitting device.

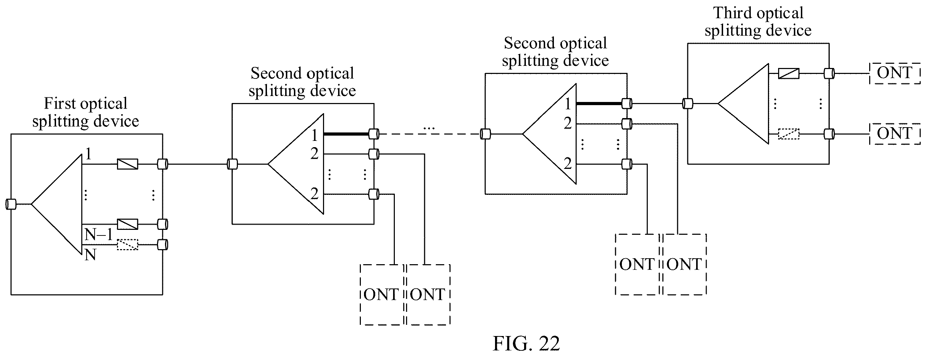

Optionally, as shown in FIG. 22, an output port of the first optical splitting device shown in FIG. 19 is connected to a plurality of cascaded second optical splitting devices shown in FIG. 20, and the plurality of second optical splitting devices shown in FIG. 20 are cascaded through first output ports. In addition, a first output port of a last-stage second optical splitting device shown in FIG. 20 is connected to the third optical splitting device shown in FIG. 21. In this way, the first-type optical splitting link in the optical network system shown in FIG. 14 may be implemented for deployment. The second output ports of the second optical splitting device shown in FIG. 20 and the output ports of the third optical splitting device shown in FIG. 21 may be configured to be connected to ONTs.

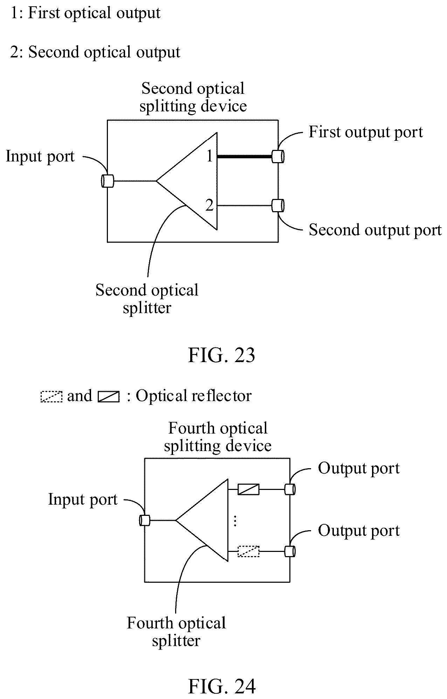

For example, FIG. 23 is a diagram of a structure of another second optical splitting device according to this application. As shown in FIG. 23, the second optical splitting device includes a second-type second optical splitter, one input port, one first output port, and one second output port. The input port of the second optical splitting device is connected to an optical input of a second-type second optical splitter. The second-type second optical splitter includes one first optical output and one second optical output. The first optical output of the second-type second optical splitter is connected to the first output port of the second optical splitting device, and the second optical output of the second-type second optical splitter is connected to the second output port of the second optical splitting device.

For example, FIG. 24 is a diagram of a structure of a fourth optical splitting device according to this application. The fourth optical splitting device may include a fourth optical splitter, one input port, a plurality of output ports, and at least one optical reflector. An optical input of the fourth optical splitter is connected to the input port of the fourth optical splitting device, and a plurality of optical outputs of the fourth optical splitter are connected to the plurality of output ports of the fourth optical splitting device in one-to-one correspondence. At least one optical reflector is serially connected between at least one optical output of the fourth optical splitter and at least one output port of the fourth optical splitting device.

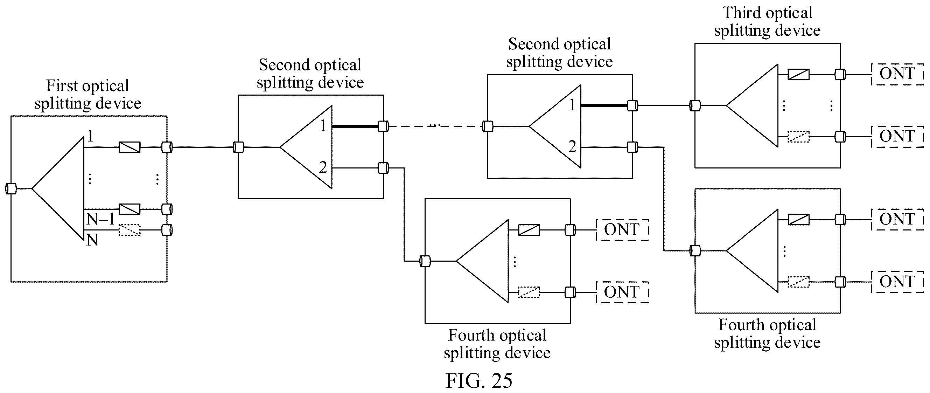

Optionally, as shown in FIG. 25, an output port of the first optical splitting device shown in FIG. 19 is connected to a plurality of cascaded second optical splitting devices shown in FIG. 23, and the plurality of second optical splitting devices shown in FIG. 23 are cascaded through first output ports. In addition, a first output port of a last-stage second optical splitting device shown in FIG. 23 is connected to the third optical splitting device shown in FIG. 21. Moreover, a second output port of each second optical splitting device shown in FIG. 23 is connected to the fourth optical splitting device shown in FIG. 24. In this way, the second-type optical splitting link in the optical network system shown in FIG. 15 may be implemented for deployment. The output ports of the fourth optical splitting device shown in FIG. 24 and the output ports of the third optical splitting device shown in FIG. 21 may be configured to be connected to ONTs.

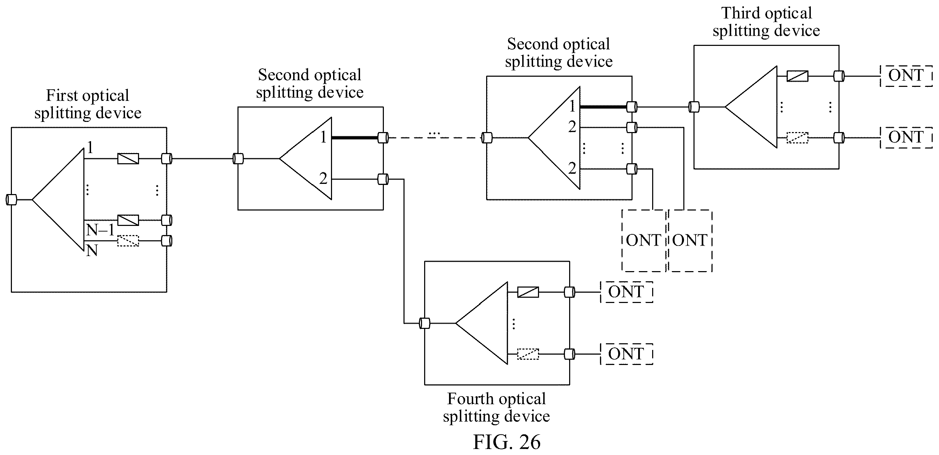

Optionally, as shown in FIG. 26, an output port of the first optical splitting device shown in FIG. 19 is connected to a plurality of cascaded second optical splitting devices. The plurality of cascaded second optical splitting devices may include the second optical splitting device shown in FIG. 20 and the second optical splitting device shown in FIG. 23, and the plurality of second optical splitting devices are cascaded through first output ports. In addition, the second output port of the second optical splitting device shown in FIG. 23 is connected to the fourth optical splitting device shown in FIG. 24. Moreover, a first output port of a last-stage second optical splitting device in the cascaded second optical splitting devices is connected to the third optical splitting device shown in FIG. 21. In this way, the third-type optical splitting link in the optical network system shown in FIG. 16 may be implemented for deployment. The second output ports of the second optical splitting device shown in FIG. 20, the output ports of the third optical splitting device shown in FIG. 21, and the output ports of the fourth optical splitting device shown in FIG. 24 may be configured to be connected to ONTs.

In FIG. 19, FIG. 20, FIG. 21, FIG. 23, and FIG. 24, an example in which each optical splitter independently forms an optical splitting device is used. In some possible cases, a plurality of optical splitters may be configured into a same device for networking, and an optical network system can still be formed through networking.

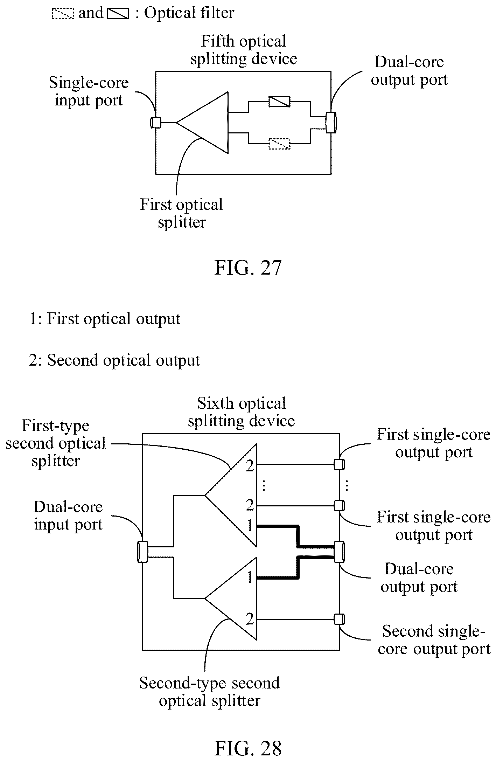

For example, FIG. 27 is a diagram of a structure of a fifth optical splitting device. As shown in FIG. 27, the fifth optical splitting device may include a first optical splitter, one single-core input port, one dual-core output port, and at least one optical filter. The first optical splitter in the fifth optical splitting device is a 1:2 even optical splitter, and the first optical splitter includes two optical outputs. The single-core input port of the first optical splitting device is connected to an optical input of the first optical splitter, and the two optical outputs of the first optical splitter are connected to the dual-core output port of the first optical splitting device. The dual-core output port has two cores, and the two cores of the dual-core output port are in one-to-one correspondence with the two optical outputs of the first optical splitter. One optical filter is serially connected between at least one optical output of the first optical splitter and the dual-core output port, and different optical filters are configured to select optical signals of different wavelengths that pass through.

For example, FIG. 28 is a diagram of a structure of a sixth optical splitting device. As shown in FIG. 28, the sixth optical splitting device may include a first-type second optical splitter, a second-type second optical splitter, one dual-core input port, one dual-core output port, a plurality of first single-core output ports, and one second single-core output port. The first-type second optical splitter includes one first optical output and a plurality of second optical outputs, and the second-type second optical splitter includes one first optical output and one second optical output. A first core of the dual-core input port of the sixth optical splitting device is connected to an optical input of the first-type second optical splitter, and a second core of the dual-core input port of the sixth optical splitting device is connected to an optical input of the second-type second optical splitter. A first core of the dual-core output port of the sixth optical splitting device is connected to the first optical output of the first-type second optical splitter, and a second core of the dual-core output port of the sixth optical splitting device is connected to the first optical output of the second-type second optical splitter. The plurality of second optical outputs of the first-type second optical splitter are connected to the plurality of first single-core output ports of the sixth optical splitting device in one-to-one correspondence, and the second optical output of the second-type second optical splitter is connected to the second single-core output port of the sixth optical splitting device.

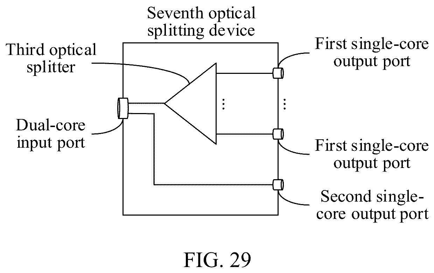

For example, FIG. 29 is a diagram of a structure of a seventh optical splitting device. As shown in FIG. 29, the seventh optical splitting device includes a third optical splitter, one dual-core input port, a plurality of first single-core output ports, and one second single-core output port. A first core of the dual-core input port of the seventh optical splitting device is connected to an optical input of the third optical splitter, a second core of the dual-core input port of the seventh optical splitting device is connected to the second single-core output port, and a plurality of optical outputs of the third optical splitter are connected to the plurality of first single-core output ports of the seventh optical splitting device in one-to-one correspondence.

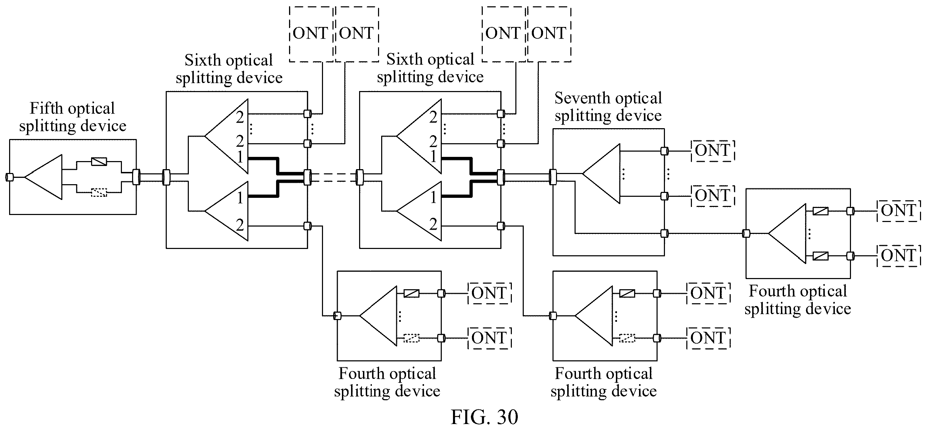

Optionally, as shown in FIG. 30, the dual-core output port of the fifth optical splitting device shown in FIG. 27 is connected to a plurality of cascaded sixth optical splitting devices shown in FIG. 28, and the plurality of cascaded sixth optical splitting devices shown in FIG. 28 are cascaded through dual-core input ports and dual-core output ports. A dual-core output port of a last-stage sixth optical splitting device in the plurality of cascaded sixth optical splitting devices shown in FIG. 28 is connected to the dual-core input port of the seventh optical splitting device shown in FIG. 29. In addition, a second single-core output port of each sixth optical splitting device shown in FIG. 28 is connected to the fourth optical splitting device shown in FIG. 24. Moreover, the second single-core output port of the seventh optical splitting device shown in FIG. 29 is connected to the fourth optical splitting device shown in FIG. 24. In this way, an optical network system including the first-type optical splitting link in FIG. 14 and the second-type optical splitting link shown in FIG. 15 may be obtained for deployment. The output ports of the fourth optical splitting device, the first single-core output ports of the sixth optical splitting device, and the first single-core output ports of the seventh device are configured to be connected to ONTs.

Optionally, the optical splitting devices (for example, the first optical splitting device, the second optical splitting device, ..., and the seventh optical splitting device) in embodiments of this application may include pattern identifiers. The pattern identifier is for querying specification information of the optical splitting device. The specification information may include an internal structure of the optical splitting device, a rated parameter of the optical splitting device, and the like. The internal structure of the optical splitting device may be a connection relationship between an optical splitter inside the optical splitting device and a port of the optical splitter. The rated parameter of the optical splitting device may include an optical splitting ratio of the optical splitting device, a rated attenuation value of a probe optical signal when passing through the optical splitting device, and the like. When the optical splitting device includes an optical reflector, the rated parameter may further include an optical reflectivity.

Optionally, in embodiments of this application, integrating at least some components in the optical network system into the optical network device is merely an example. In an actual application, the at least some components in the optical network system may be alternatively integrated in another manner. It should be understood that any form of an optical network device into which the components in the optical network system provided in this application are integrated shall fall within the protection scope of this application.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the devices or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units are integrated into one unit.

All or some of the foregoing embodiments may be implemented by using software, hardware, firmware, or any combination thereof. When a software program is used to implement embodiments, embodiments may be implemented completely or partially in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), a semiconductor medium (for example, a solid-state disk (solid-state disk, SSD)), or the like.

Terms such as "component", "module", and "system" used in this application are used to indicate computer-related entities. The computer-related entities may be hardware, firmware, combinations of hardware and software, software, or software in running. For example, a component may be but is not limited to a process that runs on a processor, a processor, an object, an executable file, a thread of execution, a program, and/or a computer. As an example, both a computing device and an application that runs on the computing device may be components. One or more components may reside within a process and/or a thread of execution, and a component may be located on one computer and/or distributed between two or more computers. In addition, these components may be executed from various computer-readable media that have various data structures. These components may communicate by using a local and/or remote process and based on, for example, a signal having one or more data packets (for example, data from one component, where the component interacts with another component in a local system or a distributed system, and/or interacts with another system via a network such as the Internet by using a signal).

This application presents aspects, embodiments, or features around a system that may include a plurality of devices, components, modules, or the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the term "example" is used to represent giving an example, an illustration, or a description. Any embodiment or design scheme described as an "example" in this application should not be explained as being more preferred or having more advantages than another embodiment or design scheme. Exactly, the term "example" is used to present a concept in a specific manner.

In embodiments of this application, "information (information)", "signal (signal)", and "message (message)" sometimes can be used interchangeably. It should be noted that expressed meanings are consistent when differences are not emphasized. The terms "of (of)", "corresponding (corresponding, relevant)", and "corresponding (corresponding)" may be interchangeably used sometimes. It should be noted that meanings expressed by the terms are consistent when differences of the terms are not emphasized. Sometimes, "system" and "network" may be used together. When the difference is not emphasized, the meanings to be expressed are consistent. For example, "communication network" also refers to "communication system".

The network architecture and the service scenario described in embodiments of this application are intended to describe the technical solutions in embodiments of this application more clearly, and do not constitute a limitation on the technical solutions provided in embodiments of this application. A person of ordinary skill in the art may know that: With the evolution of the network architecture and the emergence of new service scenarios, the technical solutions provided in embodiments of this application are also applicable to similar technical problems.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. An optical network system, wherein the optical network system comprises a detection device, a first optical splitter, and an optical filter;

   the first optical splitter comprises one optical input and N optical outputs, wherein $N \geq 2$;
   the optical input of the first optical splitter is connected to the detection device, (N-1) optical outputs of the first optical splitter are connected to ingresses of (N-1) optical filters in one-to-one correspondence, egresses of the (N-1) optical filters are connected to (N-1) optical splitting links, and the optical splitting link is for providing user access;
   the (N-1) optical filters are respectively configured to select optical signals of different wavelengths that pass through; and
   the detection device is configured to: send probe optical signals of different wavelengths to the first optical splitter, and receive a probe optical signal returned by at least one of the optical splitting links.

2. The optical network system according to claim 1, wherein an optical output other than the (N-1) optical outputs in the N optical outputs of the first optical splitter is connected to one optical splitting link; or an optical output other than the (N-1) optical outputs in the N optical outputs of the first optical splitter is connected to an ingress of one optical filter, and an egress of the optical filter is connected to one optical splitting link.

3. The optical network system according to claim 1 or 2, wherein each of the optical splitting links comprises a plurality of cascaded second optical splitters and one third optical splitter, wherein the first optical splitter is connected to a first-stage second optical splitter in the plurality of cascaded second optical splitters, and the third optical splitter is connected to a last-stage second optical splitter in the plurality of cascaded second optical splitters; and
   the third optical splitter comprises a plurality of optical outputs, and the plurality of optical outputs of the third optical splitter are configured to be connected to a plurality of optical network terminals, ONTs.

4. The optical network system according to claim 3, wherein at least one optical output of the third optical splitter is connected to at least one optical reflector, the at least one optical reflector is configured to be connected to at least one ONT, and the optical reflector is configured to partially reflect the probe optical signal.

5. The optical network system according to claim 3 or 4, wherein N optical splitting links connected to the N optical outputs of the first optical splitter comprise a first-type optical splitting link, and a plurality of second optical splitters on the first-type optical splitting link are first-type second optical splitters, wherein the first-type second optical splitter comprises one first optical output and a plurality of second optical outputs;

   the first optical output is a cascading interface, and the plurality of second optical outputs are configured to be connected to a plurality of ONTs; and
   at least one second optical output of the plurality of second optical outputs is connected to an ingress of at least one optical reflector, an egress of the at least one optical reflector is configured to be connected to at least one ONT, and the optical reflector is configured to partially reflect the probe optical signal.

6. The optical network system according to claim 3 or 4, wherein N optical splitting links connected to the N optical outputs of the first optical splitter comprise a second-type optical splitting link, and a plurality of second optical splitters on the second-type optical splitting link are second-type second optical splitters, wherein the second-type second optical splitter comprises one first optical output and one second optical output;

the first optical output is a cascading interface, and the second optical output is connected to an optical input of a fourth optical splitter; and

the fourth optical splitter comprises a plurality of optical outputs, at least one optical output of the fourth optical splitter is connected to an ingress of at least one optical reflector, an egress of the at least one optical reflector is configured to be connected to at least one ONT, and the optical reflector is configured to partially reflect the probe optical signal.

7. The optical network system according to claim 3 or 4, wherein N optical splitting links connected to the N optical outputs of the first optical splitter comprise a third-type optical splitting link, and a plurality of second optical splitters on the third-type optical splitting link comprise a first-type second optical splitter and a second-type second optical splitter, wherein the first-type second optical splitter comprises one first optical output and a plurality of second optical outputs, and the second-type second optical splitter comprises one first optical output and one second optical output;

the first optical output of the first-type second optical splitter is a cascading interface, and the plurality of second optical outputs of the first-type second optical splitter are configured to be connected to a plurality of ONTs; and

the first optical output of the second-type second optical splitter is a cascading interface, and the second optical output of the second-type second optical splitter is connected to a fourth optical splitter, wherein the fourth optical splitter comprises a plurality of optical outputs, at least one optical output of the fourth optical splitter is connected to an ingress of at least one optical reflector, an egress of the at least one optical reflector is configured to be connected to at least one ONT, and the optical reflector is configured to partially reflect the probe optical signal.

8. The optical network system according to any one of claims 3 to 7, wherein the second optical splitter is an uneven optical splitter, and optical power of the first optical output of the second optical splitter is greater than optical power of the second optical output of the second optical splitter.

9. The optical network system according to any one of claims 3 to 8, wherein the third optical splitter is an even optical splitter.

10. The optical network system according to claim 6 or 7, wherein the fourth optical splitter is an even optical splitter.

11. The optical network system according to any one of claims 1 to 10, wherein the first optical splitter is an even optical splitter.

12. The optical network system according to any one of claims 1 to 11, wherein the optical network system further comprises an optical line terminal, OLT, and a coupler, the detection device and the OLT are connected to the first optical splitter through the coupler, and the optical filter allows an optical signal sent by the OLT to pass through.

13. A first optical splitting device, wherein the first optical splitting device comprises a first optical splitter, one input port, N output ports, and at least (N-1) optical filters;

the first optical splitter comprises one optical input and N optical outputs, the optical input of the first optical splitter is connected to the input port, and the N optical outputs of the first optical splitter are connected to the N output ports in one-to-one correspondence; and

the optical filters are serially connected between (N-1) optical outputs of the first optical splitter and (N-1) output ports, and different optical filters are configured to select optical signals of different wavelengths that pass through.

14. A first optical splitting device, wherein the first optical splitting device comprises a first optical splitter, one single-core input port, one dual-core output port, and at least one optical filter;

the first optical splitter comprises one optical input and two optical outputs, the optical input of the first optical splitter is connected to the single-core input port, and the two optical outputs of the first optical splitter are connected to the dual-core output port; and

the optical filter is serially connected between at least one optical output of the optical splitter and the dual-core output port, and different optical filters are configured to select optical signals of different wavelengths that pass through.

EP 4 746 441 A1

FIG. 1

FIG. 2

FIG. 3

FIG. 4

FIG. 5

FIG. 6

FIG. 7

FIG. 8

Optical power
attenuation value (dB)

W1

Rated
attenuation
value x1

Measured
attenuation
value x2

FIG. 9

Optical power
attenuation value (dB)

W1

Rated
attenuation
value x1

Measured
attenuation
value x2

FIG. 10

FIG. 11

FIG. 12

FIG. 13

FIG. 14

FIG. 15

FIG. 16

FIG. 17

FIG. 18

EP 4 746 441 A1

⬚ and ◹ : Optical filter

First optical
splitting device

Input port

Output port

1

Output port

⋮        ⋮

N–1

Output port

N

First optical
splitter

FIG. 19

1: First optical output

2: Second optical output

Second optical
splitting device

Input port

First output port

1

2

Second output port

⋮        ⋮

2

Second output port

Second
optical splitter

FIG. 20

▨ and ▱ : Optical reflector

FIG. 21

FIG. 22

1: First optical output

2: Second optical output

Second optical
splitting device

Input port

First output port

1

2

Second output port

Second optical
splitter

FIG. 23

▦ and ▨ : Optical reflector

Fourth optical
splitting device

Input port

Output port

⋮

Output port

Fourth optical
splitter

FIG. 24

FIG. 25

FIG. 26

EP 4 746 441 A1

▨ and ◹ : Optical filter

Fifth optical
splitting device

Single-core
input port

Dual-core
output port

First optical
splitter

FIG. 27

1: First optical output

2: Second optical output

Sixth optical
splitting device

First-type
second optical
splitter

Dual-core
input port

First single-core
output port

First single-core
output port

Dual-core
output port

Second single-
core output port

Second-type second
optical splitter

FIG. 28

Seventh optical
splitting device

Third optical
splitter

First single-core
output port

Dual-core
input port

First single-core
output port

Second single-
core output port

FIG. 29

FIG. 30

## INTERNATIONAL SEARCH REPORT

| International application No. |
| --- |
| **PCT/CN2024/094551** |

### A. CLASSIFICATION OF SUBJECT MATTER

H04Q11/00(2006.01)i

According to International Patent Classification (IPC) or to both national classification and IPC

### B. FIELDS SEARCHED

Minimum documentation searched (classification system followed by classification symbols)

IPC:H04Q

Documentation searched other than minimum documentation to the extent that such documents are included in the fields searched

Electronic data base consulted during the international search (name of data base and, where practicable, search terms used)

CNTXT, CNABS, WOTXT, USTXT, EPTXT, VEN, IEEE, CNKI: 波长, 单芯, 多芯, 分光, 分路, 光分配网, 光分束, 光时域反射, 光网络单元, 光网络终端, 滤波, 滤光, 双芯, 无源光网络, core, dual, multi, network, ODN, ONT, ONU, optical, OTDR, PON, wavelength, terminal, filter, splitter

### C. DOCUMENTS CONSIDERED TO BE RELEVANT

| Category* | Citation of document, with indication, where appropriate, of the relevant passages | Relevant to claim No. |
| --- | --- | --- |
| X | WO 2013017302 A1 (TELEFONICA SA) 07 February 2013 (2013-02-07) description, page 5 paragraph 2-page 10 paragraph 5, and figures 1-7 | 1-13 |
| X | CN 116055924 A (ZTE CORP.) 02 May 2023 (2023-05-02) description, paragraphs [0070]-[0100], and figures 14-19 | 1-13 |
| X | CN 112653939 A (HUAWEI TECHNOLOGIES CO., LTD.) 13 April 2021 (2021-04-13) description, paragraphs [0097]-[0113], and figure 3 | 13 |
| A | CN 214101388 U (HUAWEI TECHNOLOGIES CO., LTD.) 31 August 2021 (2021-08-31) entire document | 1-14 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 August 2024** | **05 August 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/094551**

| Patent document cited in search report | | | Publication date (day/month/year) | Patent family member(s) | | | Publication date (day/month/year) |
|---|---|---|---|---|---|---|---|
| WO | 2013017302 | A1 | 07 February 2013 | AR | 087319 | A1 | 12 March 2014 |
| CN | 116055924 | A | 02 May 2023 | CN | 116055924 | B | 14 July 2023 |
| CN | 112653939 | A | 13 April 2021 | CN | 112653939 | B | 31 December 2021 |
| | | | | WO | 2022110900 | A1 | 02 June 2022 |
| | | | | MX | 2023006196 | A1 | 09 June 2023 |
| | | | | KR | 20230106687 | A | 13 July 2023 |
| | | | | VN | 97482 | A | 25 August 2023 |
| | | | | EP | 4236347 | A1 | 30 August 2023 |
| | | | | BR | 112023010294 | A2 | 05 September 2023 |
| | | | | US | 2023300501 | A1 | 21 September 2023 |
| | | | | IN | 202327035508 | A | 24 November 2023 |
| | | | | JP | 2023551004 | W | 06 December 2023 |
| | | | | EP | 4236347 | A4 | 17 April 2024 |
| CN | 214101388 | U | 31 August 2021 | WO | 2022037296 | A1 | 24 February 2022 |
| | | | | MX | 2023001994 | A1 | 27 February 2023 |
| | | | | EP | 4187810 | A1 | 31 May 2023 |
| | | | | US | 2023204860 | A1 | 29 June 2023 |
| | | | | JP | 2023538008 | W | 06 September 2023 |
| | | | | EP | 4187810 | A4 | 10 January 2024 |

Form PCT/ISA/210 (patent family annex) (July 2022)

**REFERENCES CITED IN THE DESCRIPTION**

**Patent documents cited in the description**

• CN 202311052012